# EUROPEAN PATENT SPECIFICATION

(11) **EP 3 528 645 B1**
(45) Date of publication and mention of the grant of the patent: **30.09.2026**
(21) Application number: 17811616.6
(22) Date of filing: 14.12.2017
(51) Int. Cl.: A23L 27/21, A23L 27/20, A23L 27/10, A23G 3/32, A21D 2/18

(54) **OLIGOSACCHARIDES FOR FLAVOUR GENERATION**
OLIGOSACCHARIDE ZUR GESCHMACKSERZEUGUNG
OLIGOSACCHARIDES DE PRODUCTION D'ARÔME

(30) Priority: 16.12.2016 EP 16204867
(43) Date of publication of application: 28.08.2019
(60) Divisional application: 26151600.9 / 4 736 654
(73) Proprietor: Société des Produits Nestlé S.A., 1800 Vevey (CH)
(72) Inventor: DAVIDEK, Tomas, 1410 Correvon (CH); NOVOTNY, Ondrej, 1053 Cugy (CH); VAFEIADI, Christina, 1000 Lausanne 26 (CH)
(74) Representative: Ng, Yen Kar
(86) International application number: PCT/EP2017/082794
(87) International publication number: WO 2018/109074

(56) References cited:
- EP-A1- 0 028 897
- EP-A1- 1 252 825
- EP-A1- 2 422 630
- EP-A1- 2 716 771
- WO-A1-03/106472
- WO-A1-2009/149947
- JP-A- 2004 002 241
- US-A1- 2013 060 006
- DATABASE EMBASE [online] ELSEVIER SCIENCE PUBLISHERS, AMSTERDAM, NL; 1991, KETTNER B ET AL: "5,6-Dihydro-3,5-dihydroxy-4H-pyridones - A new maillard products from 6-O-substituted hexoses and primary amines", Database accession no. EMB-1991353998
- KETTNER B ET AL: "5,6-Dihydro-3,5-dihydroxy-4H-pyridones - A new maillard products from 6-O-substituted hexoses and primary amines", TETRAHEDRON 1991 GB, vol. 47, no. 45, 1991, pages 9351 - 9356, ISSN: 0040-4020
- YASUKO KATO ET AL: "Maillard reaction of disaccharides with protein: suppressive effect of nonreducing end pyranoside groups on browning and protein polymerization", JOURNAL OF AGRICULTURAL AND FOOD CHEMISTRY, vol. 37, no. 4, 1 July 1989 (1989-07-01), pages 1077 - 1081, XP055269523, ISSN: 0021-8561, DOI: 10.1021/jf00088a057
- KUNZ T ET AL: "Carbohydrates addition during brewing - effects on oxidative processes and formation of specific ageing compounds.", BREWINGSCIENCE - MONATSSCHRIFT FÜR BRAUWISSENSCHAFT, vol. 68, no. 7-8, July 2015 (2015-07-01) - August 2015 (2015-08-01), pages 78 - 92, XP002777352

## Description

### Field of the invention

The present invention relates to the use of a special class of oligosaccharides, herein called iso-oligosaccharides, for flavour generation during thermal processing of food. The invention also relates to the use of such oligosaccharides in the form of individual compounds, or as mixtures thereof, or in the form of ingredients comprising the individual compounds or mixtures thereof, or as enzymatic or fermented preparations containing the individual compounds or mixtures thereof.

### Background of the invention

The flavour of a product, comprising the aroma (volatile compounds) and the taste (non-volatile compounds) of a product, has been recognised as one of the main drivers for consumers' food preference. There are several means how to modulate flavour during production of foods. Use of raw materials rich in intrinsic flavour as well as addition of various spices, natural or artificial flavourings or flavour enhancers are the most common approaches.

Typical flavour characteristics of many foodstuffs are generated during thermal processes such as roasting, frying, drying, baking, toasting, cooking, extrusion etc. In all these processes, Maillard reaction plays a central role in the formation of flavours and colour.

Anyways, existing approaches present some drawbacks.

Use of pure flavour active molecules such as commercial flavourings in several product categories is intricate (e.g. in the production of wafer or extruded cereals), because many desirable volatile flavour components are lost. This is either due to thermal degradation or flashing off (stripping) during the cooking. Several aroma active compounds are not stable and undergo decomposition and/or reaction with other compounds in the food matrix upon thermal processing. Large volume of steam is also vented during the baking or extrusion process which carries away volatiles aroma compounds.

In baked goods that comprise other components, such as a filling or a chocolate coating, it is possible to add flavour active molecules into the non-baked component. However, such solution may be perceived as artificial by consumers due to the mismatch in expectations (consumers expect certain flavour notes such as biscuity/baked note to be perceived form baked component and not from other components). Similarly, in extruded products, flavours can be added to the coating.

Yet, as these products are consumed with the milk, the flavour is partially washed out to the milk before the consumption that consequently decreases the flavour intensity of the consumed product.

Thus, there would be a need for a method for generation of flavour active compounds directly during the process, especially in the right component where the flavour is expected by the consumers, so that lost during processing is minimized.

Furthermore, there is a common trend driven by consumer perception to eliminate or replace flavouring ingredients that are not natural.

Thus, there is also a need to remove flavouring ingredients which are not natural.

Apart from using natural flavours, thermal flavour generation upon food processing appears to be a promising approach for flavour modulation.

Content of Maillard reactants (flavour precursors) in raw materials is often a limiting factor responsible for moderate flavour generation and consequently inferior flavour of several thermally treated products. Addition of pure flavour precursors (Maillard reactants) can boost flavour generation during thermal processes and thus can be used as a tool for flavour modulation. Our invention describes new class of very potent flavour precursors that are commercially available as food ingredients.

Several approaches how to boost flavour generation during thermal processes have been described based on addition of Maillard precursors. EP2000032 disclosed use of various amino acids and reducing sugars in order to improve flavour during preparation of baked foodstuff such as wafer, extruded cereal or biscuit. GB1421397A and US3930045 disclosed use sulphur-containing amino acids and reducing sugars for preparation expanded porous food product having a meat-like flavour. US4022920 described use of Amadori compounds (intermediate products of Maillard reaction) as flavour precursors for flavour modulation of the foodstuff heated to at least 90°C before the consumption. EP1266581 described the method for bioconversion of amino acids, peptides and reducing sugar in the presence of yeasts and use of thereof in baking in order to enhance typical baked aroma. EP1252825 and US2013/0060006 disclose the use of saccharides for generating umami and kokumi flavor compounds, whereby the saccharides may be selected from iso-oligosaccharides. JP2004002241 discloses the use of isomaltulose for generating 5-[(α-D-glucopyranosyloxy)methyl]-2-furancarboxaldehyde, which is useful as a taste-modifying agent in foods.

Several groups have reported on effect of sugars and free amino acids on the flavour development during extrusion. Impact on sensory attributes and on volatile composition of extruded wheat flour was observed after addition of glucose (5%) and individual amino acids (2%) such as alanine or leucine or lysine or threonine or cysteine. Strong impact of sucrose (0.6%) and cystein or proline (0.5%) on sensory attributes and volatile profile of extruded corn flour was also described (see Fadel et al.: Egypt.J.Food Sci. 34(1), 21-36 (2006)). Formation of caramel smelling odorant 4-hydroxy-2,5-dimethyl-3(2*H*)-furanone during the extrusion was studied after addition of rhamnose and lysine and key process and recipe parameters driving its formation were identified (see Davidek et al.: Food Funct. 4, 1105-1110 (2013)).

Amino acids and reducing sugars could be released also by bioprocessing from protein and carbohydrates sources, respectively. For instance, in cereal processing, enzymatic hydrolysis of flour by α-amylase and amyloglucosidase is well established and widely used. Glucose and maltose released from starch hydrolysis then significantly contribute to flavour and colour generation during roller drying of such enzymatic preparation. Similarly, amino acids and reducing sugars can be generated during malting, and more specifically during the mashing step, when the endogenous amylolytic and proteolytic enzymes of germinated cereals are activated. US5888562 described a process for treating pastes and liquors prepared from cocoa beans with protease to release free hydrophobic amino acids that consequently improves cocoa flavour by the roasting.

Additionally, reduction of sugar (sucrose) in foods is currently a global trend driven by consumer perception worldwide. Sucrose reduction has a significant impact on the flavour, as it leads among others to lower flavour intensity. Especially cereal products, that are generally inferior in their intrinsic flavour, are drastically impacted. Compensation of loss of sweetness after sugar reduction is a challenge.

Thus, there is also a need for decrease sugars' content while contemporarily keeping at least comparable flavour intensity.

Besides sugar reduction, it would be desirable that sugars in foods (for example sucrose) are replaced with different carbohydrates which might have a better nutritional connotation and/or bring some health benefits. Unfortunately such sugar replacement present analogous issues in terms of flavour development as above reported for sugar reduction. Several solutions delivering health benefits have in fact rather negative impact on flavour (e.g. inclusion of bran, reduction of sugar etc.) that often results in decrease of consumer preference.

Thus, there is also a need for replacing sugars with carbohydrates endowed with better nutritional connotations and/or providing health benefits while contemporarily keeping at least comparable flavour intensity in the food product.

The inventors have surprisingly found that at least one or more of the above mentioned problems may be solved by the use of iso-oligosaccharides of formula (I) below described as flavour precursors in Maillard reaction under thermal processing.

### Summary of the invention

Inventors surprisingly found an extraordinary potential for iso-oligosaccharide of formula (I) to generate aroma active compounds during thermal processes.

In one aspect, the present invention provides for the use of certain iso-oligosaccharides of chemical formula (I) as flavour precursors in thermal processes, for example in the Maillard reaction and/or under caramelization conditions, for generating at least one odorant selected in the group consisting of 4-hydroxy-2,5-dimethyl-3(2H)-furanone, 2,3-butanedione, 2- and 3-methylbutanal, methional, phenylacetaldehyde, 2-acetyl-1-pyrroline, and mixtures thereof.

According to the present invention, the oligosaccharides of formula (I) are defined as follows:

R--------------------B (I)

Wherein
R and B are connected via a 1→6 glycosidic linkage;
B is a aldohexose monosaccharide unit of formula B1 or a ketohexose monosaccharide unit of formula B2 which comprises the carbon 6 bearing the hydroxyl group forming the 1→6 glycosidic linkage between R and B;
B1 is a group of formula 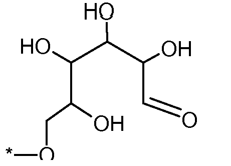
Wherein the asterisk sign (*) represents the point where the group B1 is linked to the remaining part of compounds of formula (I);
B2 is a group of formula 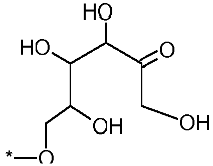
Wherein the asterisk sign (*) represents the point where the group B2 is linked to the remaining part of compounds of formula (I);
R is an optionally functionalized five or six membered monosaccharide unit which comprises the carbon 1 bearing the -OH group forming the 1→6 glycosidic linkage.

Further disclosed herein but not encompassed by the claims is a method for flavour generation in a heat-treated food product, such method comprising a step a) wherein a compound of formula (I) as described above, or mixtures thereof, is reacted under thermal treating.

Further disclosed herein but not encompassed by the claims is also a method for flavour generation in a heat-treated food product, such method comprising a step a) where a compound of formula (I) as described above, or mixtures thereof, is mixed with an ingredient providing free amino groups and reacted under thermal treating.

### Brief description of the drawings

Additional features and advantages of the present invention are described in, and will be apparent from, the description of the presently preferred embodiments which are set out below with reference to the drawings in which:
**Figure 1** reports the sugar profile in wheat flour obtained after α-amylase-TGase (which stand for Transglucosidase) treatment (Example 1)
**Figure 2** reports relative concentration (%) of selected odorants in Wafer B as compared to Wafer A set at 100% (Example 2)
**Figure 3** reports sugar profiles determined in respective soups prepared with two different enzymatic preparations: Soup A (AMG, which stands for amyloglucosidase) and Soup B (TGase) (Example 4)
**Figure 4** reports relative concentration (%) of selected odorants in the finished cereal product prepared with TGase treated flour (Powder A) as compared to product prepared with AMG treated flour (Powder B) set at 100% (Example 4)
**Figure 5** reports monadic sensory profiles of the finished cereal product prepared with TGase treated flour (Powder A) and with AMG treated flour (Powder B) (tasting was conducted after reconstitution of 50g powder in 100 mL warm water) (Example 4).
**Figure 6** reports relative yields (%) of 2,3-butanedione and 4-hydroxy-2,5-dimethyl-3(2*H*)-furanone generated from selected sugars with equimolar amount of glycine under wet conditions (yield of glucose set as 100%) (Example 5)
**Figure 7** reports relative concentrations of selected odorants in wafers A (no sugar), B (glucose), C (maltose), D (isomaltose) and E (palatinose) (concentration of glucose set as 100%) (Example 6)
**Figure 8** reports sugar profile in reference malt extract powder and malt extract powder obtained after treatment with TGase (Example 7)
**Figure 9** reports relative concentration (%) of selected odorants in heated mixtures of glycine-TGase treated malt extract and glycine-reference malt extract (100%) (Example 8)
**Figure 10** reports relative concentration (%) of selected odorants in Wafer B as compared to Wafer A set at 100% (Example 9)
**Figure 11** reports relative concentration (%) of selected odorants in Powder B as compared to Powder A set at 100% (Example 10)
**Figure 12** reports relative concentration (%) of selected odorants in Powder B as compared to Powder A set at 100% (Example 11)
**Figure 13** reports relative concentration (%) of selected odorants in Formula B as compared to Formula A set at 100% (Example 12)
**Figure 14** reports sugar profile in whole grain wheat flour obtained after α-amylase-TGase treatment (Example 13)
**Figure 15** reports relative concentration (%) of odorants in Extrudate B as compared to Extrudate A set at 100% (Example 14)

### Detailed description of the invention

The invention is as defined in the claims. The invention disclosed herein relates to the use of a new group of Maillard precursors. The inventors surprisingly found an extraordinary potential to generate certain aroma active compounds during thermal treatment for iso-oligosaccharides of formula (I) as below described.

The inventors have surprisingly found that the use of such iso-oligosaccharides of formula (I) as flavour precursor in the Maillard reaction present several advantages.

The replacement of sucrose and/or other common reducing sugars (e.g. glucose, maltose) with these iso-oligosaccharides maintains or enhances flavour generation upon processing, which may compensates loss of flavour intensity due to the sugar reduction. Thus, the use of iso-oligosaccharides of formula (I) may contribute to sugar reduction (nutritional superiority) while delivering at least comparable flavour intensity. As based on the examples, it can be observed that these iso-oligosaccharides may compensate the absence or reduction of reducing sugars, such as maltose and/or glucose.

Additionally, the invention described herein proposes partial replacement of sucrose or other mono- and di- saccharides such as glucose, maltose by alternative sugars (iso-oligosaccharides of formula (I)) that have significantly better connotation among the consumers due to their health benefits.

In fact, flavour precursors disclosed herewith are known for multiple health benefits, thus, the use of these ingredients deliver the collateral benefits. Such benefits, in particular for some iso-oligosaccharides of formula (I) such as Palatinose ^{™} are well documented in the literature and will be further described herebelow. New class of flavour precursors described in our invention is widely reported for for lower glycaemic response, anticariogenic properties and others.

Moreover, flavour active compounds generated in the starch matrix (e.g. during cereal production) are immediately encapsulated in the starch. This is beneficial for their stabilization, their positioning in the product compartment expected by the consumer and for their gradual release during the consumption (chewing).

### Definitions

Within the context of the present invention the term "**flavour**" identifies the aroma (volatile compounds) and the taste (non-volatile compounds) which are comprised in a food product. Such flavour can be detected or assessed by different means, including for example sensory and analytical means. In one embodiment, the flavour generated according to the present invention is delivered by volatile compounds.

Within the context of the present invention the term **"flavour precursors"** identifies molecular species or ingredients comprising them which are added to food for the purpose of producing flavour by breaking down (for example under caramelization process) or reacting with other components (for example under Maillard reaction conditions) during thermal food processing. Such flavour precursors do not necessarily have flavouring properties themselves.

Within the context of the present invention the term **"caramelization"** will have the meaning usually assigned to it in the state of the art and it defines the thermal reaction of sugars *per se,* producing the characteristic caramel flavour and brown colour. Optionally, various ingredients (e.g. acids, ammonium salts) can be optionally used during the caramelization process in order to facilitate the sugar degradation.

Within the context of the present invention, the term **"Maillard reaction"** and '**Maillard reactants/products**' will have the meaning usually assigned to them in the state of the art and they define the complex series of chemical reactions between carbonyl and amino components derived from biological systems, present in food matrixes or in food additives (e.g. ammonium salts) and the associated reactants and products, respectively. The term Maillard reaction is used herein in the established broad sense to refer to these reactions, and includes the closely associated reactions which are usually coupled with the Maillard reaction sensu stricto (such as Strecker degradation).

Within the context of the present invention, the term "**monosaccharide**" indicates carbohydrates containing from 3 to 6 carbon atoms. They can be polyhydroxy aldehydes or polyhydroxyketones depending on whether they comprise either an aldehyde or a ketone group, along with -OH substituted carbons in a chain. Polyhydroxy aldehydes are called "aldoses". Polyhydroxyketones are called "Ketoses". Non limiting examples of 6 carbon monosaccharide (hexose) are: allose, altrose, glucose, mannose, gulose, idose, galactose, talose, psicose, fructose, sorbose and tagatose. Non limiting examples of 5 carbon monosaccharide (pentose) are: ribose, arabinose, xylose, lyxose, ribulose and xylulose.

Within the context of the present invention, the term "**oligosaccharide**" indicates a linear or branched saccharide polymer containing a small number (typically two to ten) of simple sugars (5 or 6 membered monosaccharides as above defined). The monosaccharides constituting the oligosaccharide units may be optionally functionalized, for example at free -OH groups as below defined.

Within the context of the present invention, the term "**1→6 glycosidic linkage**" or "1→6 glycosidic bond" indicates a covalent bond formed between the -OH group on carbon 1 of monosaccharide molecule and the -OH group on carbon 6 of another adjacent monosaccharide molecule.

Within the context of the present invention, the term "**iso-oligosaccharide**" indicates an oligosaccharide as above defines which contains at least one "1→6 glycosidic linkage" or "1→6 glycosidic bond" as above defined. In one embodiment of the present invention, the at least 1→6 glycosidic bond comprised in an iso-oligosaccharide according to the present invention is placed at the reducing end of the molecule.

Within the context of the present invention, the term "**reducing end**" for the oligosaccharide unit identifies the terminal monosaccharide with a free anomeric carbon that is not involved in a glycosidic link.

Within the context of the present invention, the term "**anomeric carbon**" identifies the carbonyl carbon of a monosaccharide in its acyclic form. Depending on the position assumed by -OH group attached to the anomeric carbon when the monosaccharide is in cyclic from (chair conformation), the configuration of such carbon is defined as being α (alpha) or β (beta) if the group -OH is axial or equatorial, respectively.

Within the context of the present invention, the term "**functionalized**" as referred to monosaccharide or oligosaccharide units identifies monosaccharide or oligosaccharide units according to the present invention wherein one or more of the sugar -OH groups has been replaced with an hydrogen atom or with an organic moiety A, or wherein the oxygen atom of -OH groups is substituted with an organic moiety A. The organic moiety A in the context of the present invention may be selected in the group consisting of: monosaccharide, linear or branched oligosaccharide, aglycone, C1-C8 linear or branched alkyl group, C1-C8 linear or branched alkoxy group, carboxyl group and the like.

Within the context of the present invention, the term "**ingredient providing free amino acid groups**" identifies an ingredient comprising or being constituted by one or more molecular species which present a free amino group in their structure. Non limiting examples of such ingredients are: intact or hydrolysed proteins, peptides, amino acids (all for example of animal, plant or microbial origin), glycosamine or ingredients comprising them. Non limiting examples of animal proteins or ingredients comprising them are: dairy proteins (for example whey proteins, casein), skim or whole milk (liquid or powder) or meat proteins. Non limiting examples of plant proteins or ingredients comprising them are: cereals (for example wheat, malt and the like), cereal flour (for example wheat, oath, rice and the like), cereal proteins (for example gluten), cocoa, coffee and the like, pulses (for example peas, lentils, beans) and pulse proteins.

Within the context of the present invention, the term "**heat-treated food product**" or "heat-treated product" identifies edible products which are obtained via heat treatments and which may be consumed directly or after reconstitution and/or may be used as an ingredient for further processing to prepare an edible or potable product. Non limiting examples of heat treated food products are: cereal containing products (for example baked, dried, extruded, roasted, fried, cooked, micro-waved), biscuits, cookies, wafers, cereals (breakfast, whole family and infant), bread, ice-cream cones, pizza, bread sticks, bread replacers, bakery products, cakes, muffins, cereal (for example malt) and/or cocoa and/or coffee beverages, chocolate or chocolate-like products, pet food, dairy products (for example yogurt, shakes), culinary products (for example sauces, soups, bullions, pasta, noodles).

In the context of the present invention the term **"heat treatment" or "thermal treatment"** identifies a processing step wherein a food preparation can be microbiologically, physically and/or chemically modified as an effect of application of high temperature for a given time. Non limiting examples of heat or thermal treatments are: roller drying, baking, vacuum band drying, frying, roasting, extrusion, toasting, cooking such as heating in batch reactor or in continuous processes such as tubular heat exchanger, plate heat exchanger, scrape surface heat exchanger etc.

### Compounds of formula (I)

In one embodiment, when B is group B1, the oligosaccharide of formula (I) is an iso-oligosaccharide of formula (IB1):

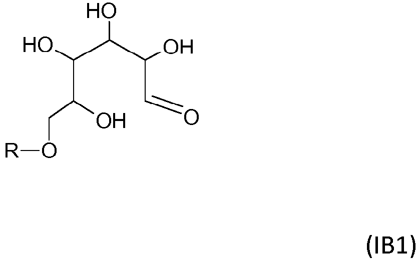

Wherein the group R is as above defined for compounds of formula (I).

In one embodiment of compounds of formula (IB1), B1 is a glucose unit, and R is a glucose unit or an oligosaccharide containing glucose units only.

In one embodiment, when B is a group B1, B1 is a glucose unit, and R is glucose unit or an oligosaccharide containing glucose units only linked by 1→6 glycosidic bond, the oligosaccharide of formula (IB1) can be also denominated "isomaltooligosaccharide".

In one embodiment, when B is group B2, the oligosaccharide of formula (I) is an oligosaccharide of formula (IB2):

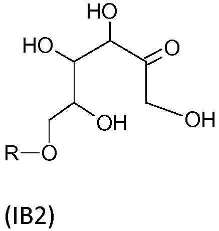

Wherein the group R is as above defined for compounds of formula (I).

In one embodiment, when R is functionalized in such a way that one or more of the - OH groups in the monosaccharide unit R are replaced with a moiety A-O-* as above defined and A is a monosaccharide or linear or branched oligosaccharide, the glycosidic link representing the connection is preferably a 1→6 glycosidic linkage.

As it will be evident for the person skilled in the art, in compounds of formula (I) the group B may be present in an open chain form (acyclic) or in a closed chain forms (cyclic) and both such forms are comprised within the scope of the present invention. In one embodiment, in compounds of formula (I) the group B is in open chain configuration. It is in fact believed that it is the open chain configuration which is responsible for the flavour generation potential and activity.

As it will be evident to a person skilled in the art, the compounds of formula (I) according to the present invention may also exist in the form of different stereoisomers, which derive from different configurations at the stereogenic carbons of the monosaccharides units comprised in the iso-oligosaccharide chain. All such stereoisomers are comprised within the scope of the present invention.

In one embodiment, the stereogenic configuration at the carbon atoms in the monosaccharide units comprised in compounds of formula (I) is such that the monosaccharide units have the stereochemistry of the form usually retrieved in nature.

In one embodiment, when R is functionalized, one or more of the -OH groups in the monosaccharide unit R are absent (replaced by an hydrogen atom) or replaced with a moiety selected from the group consisting of: A-O-* and A-*, wherein A is as above defined and the asterisk sign (*) represents the point where the group A-O- or A- is linked to the remaining part of compounds of formula (I) via the carbon atom originally bearing the -OH group that is now replaced with the moiety A-* or A-O-*.

Non limiting examples of iso-oligosaccharides of formula (I) are below provided in Table 1 along with their CAS registration numbers.

**Table 1 Examples of some iso-oligosaccharides of formula (I)**

| **Name** | **Systematic name** | **CAS number** |
|---|---|---|
| β-Gentiobiose | 6-*O*-β-D-glucopyranosyl- β-D-glucopyranose | 5996-00-9 |
| α-Melibiose | 6-*O*-α-D-galactopyranosyl-α-D-glucopyranose, | 13299-20-2 |
| β-Melibiose | 6-*O-*α-D-galactopyranosyl- β-D-glucopyranose | 13299-21-3 |
| α-Isomaltose | 6- *O*-α-D-glucopyranosyl-α-D-glucopyranose | 35867-21-1 |
| | 6-*O*-β-D-galactopyranosyl- D-galactopyranose | 3031-35-4 |
| | 6-*O*-α-D-galactopyranosyl- D-galactopyranose, | 902-54-5 |
| | 6-*O*-β-D-galactopyranosyl- D-glucopyranose | 645-03-4 |
| | 6-*O*-α-D-galactopyranosyl- D-glucopyranose | 5340-95-4 |
| | 6-*O*-β-D-glucopyranosyl- D-glucopyranose | 16750-26-8 |
| | 6-*O*-α-D-mannopyranosyl- D-glucopyranose | 16967-97-8 |
| | 6-*O*-α-D-glucopyranosyl- D-glucopyranose | 24822-33-1 |
| Isomaltose | 6-*O*-α-D-glucopyranosyl- D-glucose | 499-40-1 |
| Gentibiose | 6-*O*-β-D-glucopyranosyl- D-glucose | 554-91-6 |
| Melibiose | 6-*O*-α-D-galactopyranosyl- D-glucose | 585-99-9 |
| | 6-*O*-β-D-galactopyranosyl- D-galactose | 5077-31-6 |
| Mannobiose | 6-*O*-α-D-mannopyranosyl- D-mannose | 6614-35-3 |
| Galactobiose | 6-*O*-α-D-galactopyranosyl- D-galactose | 13117-25-4 |
| Allolactose | 6-*O*-β-D-galactopyranosyl- D-glucose | 28447-39-4 |
| | 6-*O*-β-D-mannopyranosyl- D-mannose | 71184-87-7 |
| Epigentiobiose | 6-*O*-β-D-glucopyranosyl- D-mannose | 25538-26-5 |
| Isomaltulose (palatinose) | 6-*O*-α-D-glucopyranosyl- D-fructose | 13718-94-0 |
| Gentiobiulose | 6-*O*-β-D-glucopyranosyl- D-fructose | 132436-90-9 |
| Melibiulose | 6-*O*-α-D-galactopyranosyl- D-fructose | 111188-56-8 |
| Isomaltotriose | *O*-α-D-glucopyranosyl-(1→6)-*O*-α-D-glucopyranosyl-(1→6)- D-glucose | 3371-50-4 |
| Manninotriose | *O*-α-D-galactopyranosyl-(1→6)-*O*-α-D-galactopyranosyl-(1→6)- D-glucose | 13382-86-0 |
| Isopanose | *O*-α-D-glucopyranosyl-(1→4)-*O*-α-D-glucopyranosyl-(1→6)- D-glucose | 32581-33-2 |
| Isomaltotetraose | *O*-α-D-glucopyranosyl-(1→6)-*O*-α-D-glucopyranosyl-(1→6)-*O*-α-D-glucopyranosyl-(1→6)- D-glucose | 35997-20-7 |
| α-Isomaltulose | 6-*O*-α-D-glucopyranosyl-α-D-fructofuranose | 58166-27-1 |
| Rutinose | 6-*O*-α-L-Rhamnopyranosyl- D-glucose | 90-74-4 |
| Rutinulose | 6-*O*-α-L-Rhamnopyranosyl- D-fructose | 1360593-47-0 |

In one embodiment, the iso-oligosaccharide of formula (I) for use according to the present invention is selected in the group consisting of:

| |
|---|
| 6-*O*-β-D-glucopyranosyl- β-D-glucopyranose |
| 6-*O*-α-D-galactopyranosyl-α-D-glucopyranose, |
| 6-*O*-α-D-galactopyranosyl- β-D-glucopyranose |
| 6-*O*-α-D-glucopyranosyl-α-D-glucopyranose |
| 6-*O*-β-D-galactopyranosyl- D-galactopyranose |
| 6-*O*-α-D-galactopyranosyl- D-galactopyranose, |
| 6-*O*-β-D-galactopyranosyl- D-glucopyranose |
| 6-*O*-α-D-galactopyranosyl- D-glucopyranose |
| 6-*O*-β-D-glucopyranosyl- D-glucopyranose |
| 6-*O*-α-D-mannopyranosyl- D-glucopyranose |
| 6-*O*-α-D-glucopyranosyl- D-glucopyranose |
| 6-*O*-α-D-glucopyranosyl- D-glucose |
| 6-*O*-β-D-glucopyranosyl- D-glucose |
| 6-*O*-α-D-galactopyranosyl- D-glucose |
| 6-*O*-β-D-galactopyranosyl- D-galactose |
| 6-*O*-α-D-mannopyranosyl- D-mannose |
| 6-*O*- α-D-galactopyranosyl- D-galactose |
| 6-*O*-β-D-galactopyranosyl- D-glucose |
| 6-*O*-β-D-mannopyranosyl- D-mannose |
| 6-*O*-B-D-glucopyranosyl- D-mannose |
| 6-*O*-α-D-glucopyranosyl- D-fructose |
| 6-*O*-β-D-glucopyranosyl- D-fructose |
| 6-*O*-α-D-galactopyranosyl- D-fructose |
| *O*-α-D-glucopyranosyl-(1→6)-*O*-α-D-glucopyranosyl-(1→6)- D-glucose |
| *O*-α-D-galactopyranosyl-(1→6)-*O*-α-D-galactopyranosyl-(1→6)- D-glucose |
| *O*-α-D-glucopyranosyl-(1→4)-*O*-α-D-glucopyranosyl-(1→6)- D-qlucose |
| *O*-α-D-glucopyranosyl-(1→6)-*O*-α-D-glucopyranosyl-(1→6)-*O*-α-D-glucopyranosyl-(1→6)- D-glucose |
| 6-*O*-α-D-glucopyranosyl-α-D-fructofuranose |
| 6-*O*-α-L-Rhamnopyranosyl- D-glucose |
| 6-*O*-α-L-Rhamnopyranosyl- D-fructose |

Or mixtures thereof.

As it will be apparent to the person skilled in the art the compounds of formula (I), (IB1) and/or (IB2) can be used according to the present invention in the form of individual compounds, or as mixtures thereof, or in the form of ingredients comprising the individual compounds or mixtures thereof, or as enzymatic or fermented preparations containing the individual compounds or mixtures thereof. The use of compounds of formula (I), (IB1) and/or (IB2) in all the above mentioned forms in comprised within the scope of the present invention.

In one embodiment according to the present invention, the compound of formula (I) is a compound of formula (IB1), for example an isomaltooligosaccharide or mixtures thereof.

### Isomaltooligosaccharides (IMOs)

Isomaltooligosaccharides (IMOs) are representatives of the above defined group of iso-oligosaccharides of formula (IB1). With the term isomaltooligosaccharide, it often identified a mixture of such short-chain carbohydrates which has a digestion-resistant property.

Strictly speaking, iso-maltooligosaccharides are oligomers of glucose with α-D-(1,6)-linkages (i.e. glucosyl saccharides with only α1→6 linkages throughout the moleculeand include for example isomaltose, isomaltotriose, isomaltotetraose, isomaltopentaose, and higher branched oligosaccharides).

IMOs are found naturally in some foods (e.g. honey) as well as are manufactured commercially. The raw material used for manufacturing is starch or corn syrup, which is converted into a mixture of IMOs using chemical or enzymatic processes.

Commercial IMO syrup for example is a mixture of glucosyl saccharides with both α1→6 linkages and α(1→4) linkages (for example panose) at the reducing end. Moreover, this definition ("commercial IMOs") has been extended in the last years to glucooligosaccharides linked by α1→6 linkage and/or comprising in a lower proportion α1→3 (nigerooligosaccharides) or α1→2 (kojioligosaccharides) glucosidic linkages at the reducing end.

Although such commercial IMOs ingredients comprise iso-oligosaccharides and/or compounds of formula (IB1) according to the present invention, it will be clear to the person skilled in the art that they also comprise oligosaccharides species which do not fall under the scope of the present invention (e.g. they are different from iso-oligosaccharides of formula (I) give the absence of an α1→6 linkage at the reducing end). Nonetheless, as long as such commercial ingredients contain also one or more compounds of formula (IB1), they can be used according to the present invention as flavour precursors under thermal processing, for example in caramelization process and/or Maillard reaction.

IMOs are multifunctional health molecules which may exert positive effects on human digestive health. There are numerous scientific papers available about the role of IMOs as prebiotic, least flatulence (i.e. generating least gas), low glycemic index and anti-caries activities.

IMOs are finding global acceptance by food manufacturers for use in a wide range of food products. They are gaining recognition as a robust food and beverage functional ingredients and getting acceptance with food formulators and food & beverage manufacturers, for use in a broad spectrum of applications. Although, in USA, most of the food companies are using IMOs as a source of dietary fiber, IMOs are also being used as a low calorie sweetener. Having the relative sweetness of about 50% of sucrose (sugar), IMOs cannot replace sugar in one-to-one ratio. However, as a natural food ingredient and having a high tolerance with the least side effects compared to other oligosaccharides of the same class, these carbohydrates are receiving growing attention across North America as well as in Europe.

There are many patents describing various use of IMOs in foods, however their potential for flavour generation was unknown.

Many enzymatic preparations of IMOs are known for example using transglucosidase /α-glucosidase enzymes (e.g. US8637103, US8617636, US 7608436). Production of IMOs by fermentation, for instance, from sucrose/maltose mixture using *Leuconostoc mesenteroides* ATCC 13146 was described in US7772212 B2.

Chemical processes such as, for instance, treatment of starch with an acid or an alkali can be optionally used followed by enzymatic treatment to produce IMOs.

In terms of sourcing, for example, VitaFiber^{™} by BioNeutra is commercially available high-purity isomaltooligosaccharide mixture made from enzymatic conversion of starch. It is claimed as a product with 'Three-in-One' Health Functionality (a soluble dietary fiber, a prebiotic and a low-calorie sweetener). Yet, no benefits for flavour generation are advertised by the supplier.

In one embodiment according to the present invention, the compound of formula (I) is a compound of formula (IB1), for example melibiose.

### Melibiose

Melibiose (6-O-α-D-galactopyranosyl-D-glucose), more specifically α-melibiose, is another example of a compound of formula (IB1) and exists in natural plants such as cacao beans, and has also been found in processed soybeans. It is considered as an indigestible disaccharide that increases lactic bacteria, especially bifidobacteria and improves the stool condition in humans. It can be produced enzymatically e.g. by dextransucrases (E.C. 2.4.1.10), using a donor/acceptor reaction of sucrose/raffinose respectively, or by β-fructofuranosidase (E.C. 3.2.1.26) - mediated hydrolysis of raffinose, which produces melibiose and fructose.

In one embodiment according to the present invention, the compound of formula (I) is a compound of formula (IB1), for example gentiobiose.

### Gentiobiose

Gentiobiose (6-O-β-D-glucopyranosyl- D-Glucose) exists in crocin, which is the colorant compound of saffron. It can be produced by caramelization of glucose or enzymatically e.g. by β-glucosidases (E.C. 3.2.1.119) from glucose and cellobiose via a transglycosylation reaction.

In one embodiment according to the present invention, the compound of formula (I) is a compound of formula (IB2), for example isomaltulose, more specifically 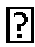 -isomaltulose.

### Isomaltulose (Palatinose^{™})

Isomaltulose is another representative of the above defined class of iso-oligosaccharides, in particular it is one example of a compound of formula (IB2). Isomaltulose is a disaccharide carbohydrate composed of glucose and fructose linked by an α-1,6-glycosidic bond (chemical name: 6-0-α-D-glucopyranosyl-D-fructose). Isomaltulose is naturally present in honey and sugar cane extracts. It has similar taste as sucrose, but has lower sweetness (about 50% as compared to sucrose). Isomaltulose is also known under the trade name Palatinose^{™}, which is manufactured by enzymatic rearrangement (isomerization) from sucrose. The enzyme (saccharose mutase) and its source were discovered and patented by Bayer (EP0049801, 1980 and EP0200069, 1985 - continuous process). Beneo has submitted a regulatory dossier to EFSA for the use of isomaltulose synthase (EC 5.4.99.11, synonym of saccharose mutase) from *Protaminobacter rubrum* (strain Z12A) for the production of isomaltulose as a novel food. Isomaltulose can be produced also by fermentation of sucrose using for example *Protaminobacter rubrum* (German Patentschrift No. 1049800, 1959) or as a side product of dextran production from sucrose by *Leuconostoc mesenteroides*.

Profoundly different effects on human (and animal) physiology with multiple potential health benefits are observed when isomaltulose is consumed in place of sucrose and certain other carbohydrates. Palatinose is a low caloric sweetener that is considered tooth friendly (anticariogenic) and has low-glycemic index (low blood glucose response while being fully digestible). In comparison with sucrose and most other carbohydrates, isomaltulose is digested slowly and steadily by humans and animals, and is essentially no substrate for oral bacteria (i.e. isomaltulose is kind to teeth by not promoting tooth decay).

Several Food Authorities worldwide actively approved several health claims such as, for instance, "does not cause tooth decay", "lower blood glucose rise", "is slowly hydrolysed", "is a slow release source of energy", "provides longer lasting energy" etc.

Palatinose has been used as a sugar alternative in foods in Japan since 1985. Palatinose is commercially available food ingredient supplied e.g. by Beneo. No benefits for flavour generation are advertised by the supplier.

### Sources for compounds of formula (I)

As it will be apparent from the section above mentioned where different examples of compounds of formula (I) and their existing sources/preparations were described, there are basically three sources of ingredients constituted by or comprising compounds of formula (I), (IB1) and/or (IB2) which are all comprised within the scope of the present invention. These are the followings:
(i) Commercially available pure compounds of formula (I), (IB1) and/or (IB2);
(ii) Commercially available ingredient comprising one or more compounds of formula (I), (IB1) and/or (IB2)
(iii) preparation comprising one or more compounds of formula (I), (IB1) and/or (IB2) obtained using chemical, enzymatic and/or fermentation processes.

### Commercial Sources

Palatinose (e.g. from Beneo) is an example under point (i) above, i.e. of a Commercially available pure compounds of formula (IB2).

VitaFiber^{™} (e.g. from BioNeutra) is commercially available mixture of high-purity isomalto-oligosaccharides made from enzymatic conversion of starch, so it is an example under point (ii) or (iii) above, i.e. a commercially available ingredient comprising several compounds of formula (IB1) which by the was obtained via enzymatic preparation. Apart high levels of isomaltose and isomaltotriose (aprox.30% together), VitaFiber^{™} contains also other saccharides such as maltose, maltotriose, panose, and some higher IMOs and oligosaccharides.

As above mentioned under point (iii), preparations (e.g. ingredients) comprising one or more compounds of formula (I), (IB1) and/or (IB2) may be obtained using chemical, enzymatic and/or fermentation processes.

### Enzymatic preparations

More specifically, enzymatic process for preparation (e.g. ingredients) comprising one or more compounds of formula (I), (IB1) and/or (IB2) refers to treatment of raw materials rich in appropriate sugar precursors by specific enzymes that lead to the formation of the desired compounds of formula (I), (IB1) and/or (IB2).

Examples of raw material and enzymes that lead to generation of defined iso-oligosaccharides are listed as follows:
- Preparation of isomaltooligosaccharides (IMOs): Enzymatic preparation of IMOs refers to treatment of ingredients rich in starch or maltodextrins using two enzymes: an α-amylase and a transglucosidase/α-glucosidase. The starch is first hydrolysed into low molecular weight maltodextrins and maltooligosaccharides, which serve as substrates (donors) for the tranglycosylation catalysed by the second enzyme. The addition of a β-amylase can be also considered in order to enhance maltose production, which is the preferred donor substrate of the transglucosidase. Ingredients rich in maltose (e.g. malt extract) could be directly treated by transglucosidase/α-glucosidase without previous treatment by α-amylase. Non limiting examples of starch/maltodextrins/maltose rich ingredients are: flour from any grain crop including rice, corn (maize), wheat, oats, barley, millet and others, starches of different plant origin, maltodextrines, glucose syrups, malt or cereal extracts etc
- Preparation of palatinose: Enzymatic preparation of palatinose refers to treatment of saccharose or ingredients rich in saccharose by isomaltulose synthase (EC 5.4.99.11) in order to induce enzymatic rearrangement (isomerization) of saccharose that gives rise palatinose. Following sources of saccharose may be used: sugar beet, sugar cane, plants (for example fruit or vegetable purees, juices, concentrates).
- Preparation of melibiose: Enzymatic preparation of melibiose can be achieved e.g. by dextransucrases, using a donor/acceptor reaction of sucrose/raffinose, respectively, or by β-fructofuranosidase-mediated hydrolysis of raffinose, which produces melibiose and fructose. The following raw materials could serve as sources of raffinose: beans, cabbage, brussels sprouts, broccoli, asparagus, other vegetables and whole grains.

### Fermentation preparations

Fermentation refers to treatment of raw materials rich in appropriate substrates by well selected microorganisms (e.g. bacteria, yeasts, fungi) that lead to the formation of defined iso-oligosaccharides. Some examples of raw material and microorganisms are given in 'Background of the invention'.

### Chemical and enzymatic preparation

Chemical processes such as, for instance, treatment of starch with an acid or an alkali can be optionally used followed by enzymatic treatment to produce IMOs.

In one embodiment of the present invention, the compound of formula (I), (IB1) and/or (IB2) is provided for step a) of the method of the invention in the form of an ingredient constituted by the compound of formula (I), (IB1), (IB2) or mixtures thereof.

In another embodiment of the present invention, the compound of formula (I), (IB1) and/or (IB2) is provided for step a) of the method of the invention in the form of an ingredient comprising the compound of formula (I), (IB1), (IB2) or mixtures thereof.

In a further embodiment of the present invention, the compound of formula (I), (IB1) and/or (IB2) is provided for step a) of the method of the invention in the form of an ingredient comprising the compound of formula (I), (IB1), (IB2) or mixtures thereof which are prepared by enzymatic or fermentation process.

In a yet further embodiment of the present invention, the compound of formula (I), (IB1) and/or (IB2) is provided for step a) of the method of the invention in the form of an ingredient comprising the compound of formula (I), (IB1), (IB2) or mixtures thereof which are prepared by enzymatic process.

In one embodiment the enzymatic preparation of the ingredient comprising the compound of formula (I), (IB1), (IB2) or mixtures thereof is performed upstream of the step a) of thermal treatment as above described and the whole process occur in a sequential set-up.

In another embodiment the enzymatic preparation of the ingredient comprising the compound of formula (I), (IB1), (IB2) or mixtures thereof is performed before the step a) of thermal treatment as above described and the enzymatic preparation is kept under appropriate conditions until the moment of its use in step a). In such embodiment, inactivation of the enzyme by heat treatment may be required in the enzymatic preparation for appropriate conservation.

### Method for flavour generation in a heat treated food product

A method for flavour generation in a heat-treated food product is provided which comprises a step a) where a compound of formula (I) as described above is reacted under thermal treating.

Furthermore, a method for flavour generation in a heat-treated food product is provided which comprises a step a) where a compound of formula (I) as described in claim 1, or mixtures thereof, is mixed with an ingredient providing free amino groups and reacted under thermal treating.

### Mixing

In one embodiment, the compound of formula (I), (IB1) and /or (IB2) is mixed with an ingredient providing free amino groups as above defined.

Mixing of a compound of formula (I), (IB1) and/or (IB2) as above described can be accomplished by any method known to the person skilled in the art, for example by wet mixing, dry mixing, soaking from solution, or dispersion into fat.

Amount of compounds of formula (I), (IB1) and/or (IB2) in the mixture may vary from 0.01 to 80% (w/w dry matter).

### Thermal treatment

Thermal flavour generation refers to process where a compound of formula (I), (IB1) and /or (IB2) and optionally an ingredient providing free amino groups as above defined are heated at temperatures typically between 70°C and 180°C for time from 0.1 min to 100 min. Examples of heating processes are: roller drying, baking, extrusion, vacuum band drying, frying, cooking, roasting, heating in batch reactor or in continuous processes such as tubular heat exchanger, plate heat exchanger, scrape surface heat exchanger etc.

Operative conditions for the heat treatment (temperature, time) are those which would be typically applied in the art for each type of heat treatment and will be apparent to the skilled person based on his knowledge in the field.

The mixture which is heat-treated may be characterized by a wide range of moisture levels (for example from 0.1 to 99%).

In one embodiment, the mixture which is treated is a wet mixture, having for example total solid content lower than 70% w/w, for example lower than 60% w/w.

In another embodiment, the mixture which is heat treated is a dry mixture, having for example total solid content above 70%.

### Enzymatic preparation of compounds of formula (I), (IB1) and /or (IB2)

In one embodiment the enzymatic preparation of the ingredient comprising the compound of formula (I), (IB1), (IB2) or mixtures thereof is performed upstream of step a) as above described and the whole process occur in a sequential set-up.

So in one embodiment, a method for flavour generation in a heat-treated food product is provided which comprises the following steps:
b) an enzymatic preparation of an ingredient comprising the compound of formula (I), (IB1) and/or (IB2) is performed;
a) the ingredient comprising the compound of formula (I), (IB1) and/or (IB2) or mixtures thereof, obtained from step b) is directly mixed with an ingredient providing free amino groups and reacted under thermal treating.

In another embodiment the enzymatic preparation of the ingredient comprising the compound of formula (I), (IB1) and/or (IB2) or mixtures thereof is performed before step a) as above described and the enzymatic preparation is kept under appropriate conditions until the moment of its use in step a). In such embodiment, inactivation of the enzyme by heat treatment may be required in the enzymatic preparation for appropriate conservation.

So another embodiment, a method for flavour generation in a heat-treated food product is provided which comprises the following steps:
b) an enzymatic preparation of an ingredient comprising the compound of formula (I), (IB1) and/or (IB2) is performed;
c) the ingredient comprising the compound of formula (I), (IB1) and/or (IB2) or mixtures thereof, obtained from step b) is stored for further use;
a) the ingredient comprising the compound of formula (I), (IB1) and/or (IB2) or mixtures thereof, obtained from step c) is mixed with an ingredient providing free amino groups and reacted under thermal treating.

In one embodiment, where iso-oligosaccharides of formula (I) are IMOs as above defined, the enzymatic preparation of the ingredient comprising them according to step b) as above described may be performed as follows.

Enzymatic preparation of IMOs refers to treatment of ingredients rich in starch or maltodextrins using two enzymes: an α-amylase and a transglucosidase/ 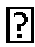 -glucosidase The starch is first hydrolysed into low molecula weight maltodextrins and maltooligosaccharides, which serve as substrates (donors and acceptors) for the tranglycosylation catalysed by the second enzyme. The addition of a β-amylase can be also considered in order to enhance maltose production, which is the preferred donor substrate of the transglucosidase. Ingredients rich in maltose (e.g. malt extract) could be directly treated by transglucosidase/ 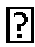 -glucosidase without previous treatment by α-amylase. The following starch/maltodextrins/maltose rich ingredients can be used: flour from any grain crop including rice, corn (maize), wheat, oats, barley, millet and others, starches of different cereals or vegetable origin, maltodextrines, glucose syrups, malt or cereal extracts etc.

In another embodiment, where iso-oligosaccharides of formula (I) is Palatinose^{™} as above defined, the enzymatic preparation of the ingredient comprising it according to step b) as above described may be performed as follows.

Enzymatic preparation of palatinose refers to treatment of saccharose or ingredients rich in saccharose by isomaltulose synthase (EC 5.4.99.11) in order to induce enzymatic rearrangement (isomerization) of saccharose that gives rise palatinose. Following sources of saccharose may be used: sugar beet, sugar cane, plants (for example fruit or vegetable purees, juices, concentrates).

In another embodiment, where iso-oligosaccharides of formula (I) is Melibiose as above defined, the enzymatic preparation of the ingredient comprising it according to step b) as above described may be performed as follows.

Enzymatic preparation of melibiose can be achieved e.g. by dextransucrases, using a donor/acceptor reaction of sucrose/raffinose, respectively, or by β-fructofuranosidase-mediated hydrolysis of raffinose, which produces melibiose and fructose. The following raw materials could serve as sources of raffinose: beans, cabbage, brussels sprouts, broccoli, asparagus, other vegetables and whole grains.

Use of iso-oligosaccharides of formula (I), (IB1) and /or (IB2) as flavour precursors
The inventors surprisingly found extraordinary potential of the above defined class of iso-oligosaccharides to generate aroma active compounds upon thermal treatment.

The inventors surprisingly found extraordinary potential of the above defined class of iso-oligosaccharides to generate aroma active compounds upon thermal treatment in the presence of an ingredient providing free amino acid groups.

Thus, according to the invention, compounds of formula (I), (IB1) and /or (IB2) are used as flavour precursors, for example in Maillard or caramelization reactions, for generating at least one odorant as defined in the claims.

In particular, iso-oligosaccharides of formula (I), (IB1) and /or (IB2) were found to generate high yields of following odorants, which are tipically developed by Maillard reaction:
4-hydroxy-2,5-dimethyl-3(2H)-furanone (caramel)
2,3-butanedione (buttery)
2- and 3-methylbutanal (malty)
methional (cooked potato)
phenylacetaldehyde (floral/honey)
2-acetyl-1-pyrroline (popcorn)
And/or mixtures thereof.

Our studies demonstrated that some di- and tri- oligosaccharides with 1→6 linkages such as isomaltose, isomaltotriose and palatinose gave much higher yields of certain odorants than disaccharides with 1→4 linkages (e.g. maltose and lactose) and even significantly higher than some monosaccharides (e.g. glucose and fructose). This is indeed surprising as it is established that reactivity of disaccharides under thermal treatment and in particular in Maillard reaction is much lower than reactivity of monosaccharides.

Without wishing to be bound by theory, the inventors believe that the 1→6 glycosidic linkage between the reducing end-hexose and the rest of the iso-oligosaccharide may be responsible for the extraordinary reactivity of oligosaccharides as compared to oligosaccharides with 1→4 glycosidic linkage (e.g. maltose, lactose).

High potential of the iso-oligosaccharides to generate mentioned odorants was demonstrated in several case studies (see Examples).

Described herein but not encompassed by the claims is a_method for flavour generation in a heat-treated food product which comprises a step a) where a compound of formula (I) as described in claim 1, or mixtures thereof, is mixed with an ingredient providing free amino groups and reacted under thermal treating to generate in the heat-treated food product one or more of the following odorants (aromas compounds):
4-hydroxy-2,5-dimethyl-3(2*H*)-furanone;
2,3-butanedione;
2- and 3-methylbutanal;
Methional;
Phenylacetaldehyde; and /or
2-acetyl- and 2-propionyl-pyrroline.

In another embodiment, compounds of formula (I), (IB1) and /or (IB2) may be used as flavour precursors under thermal treatment, for example caramelization.

In particular, iso-oligosaccharides of formula (I), (IB1) and /or (IB2) may generate the following odorants under thermal treatment (for example even in the absence of ingredients providing free amino acid groups):
4-hydroxy-2,5-dimethyl-3(2*H*)-furanone;
2,3-butanedione;
and/or mixtures thereof.

Further described herein but not encompassed by the claims is a_method for flavour generation in a heat-treated food product which comprises a step a) where a compound of formula (I) as described in claim 1, or mixtures thereof, is reacted under thermal treating to generate in the heat-treated food product one or more of the following odorants (aromas):
4-hydroxy-2,5-dimethyl-3(2*H*)-furanone;
2,3-butanedione.

### Application of the invention

Apart from health benefits, iso-oligosaccharides used according to the present invention are interesting ingredients to deliver flavour upon thermal processing. The use of iso-oligosaccharides according to the present invention represents a powerful approach to deliver nutritional superiority (sugar reduction and/or healthier profile) while maintaining/improving consumer preference (flavour).

As demonstrated by the non-limiting examples which will follow, the described method and use of the iso-oligosaccharides of the present invention may be appropriate for in multiple product categories, for example: cereals products, such as infant cereals, whole family cereals, breakfast cereals, confectionary products (such as wafers, biscuits), ice cream products (such as ice-cream cones) as well as in some powdered beverages (such as malt, cocoa and/or coffee beverages).

So in one embodiment, the heat-treated food product prepared according to the use of the invention is selected in the group consisting of: cereal containing products (for example baked, dried, extruded, roasted, fried, cooked, micro-waved), biscuits, cookies, wafers, cereals (breakfast, whole family and infant), cereals porridge, bread, ice-cream cones, pizza, bread sticks, bread replacers, bakery products, cakes, muffins, cereal (for example malt) and/or cocoa and/or coffee beverages, chocolate or chocolate-like products, pet food, dairy products (for example yogurt, shakes), culinary products (for example sauces, soups, bouillions, pasta, noodles).

### Experimental section

### ANALYTICAL METHODOLOGY

Following analytical methods were applied in analysis of samples described further in the examples.

### Sugar analysis

Sugar analysis was performed by High Performance Anionic Exchange Chromatography with pulsed Amperometric detection (HPAEC-PAD). A Dionex ICS-5000 equipped with a Carbopac PA20 column 3 x 150 mm, film thickness 6.5 µm. A gold working electrode were used.

Samples were diluted with milli-Q water and filtered (0.2 µm). 25 µL of filtered sample was injected by Dionex AS autosampler at temperature 10°C. Sugars were eluted from the column at 30°C with eluent A sodium hydroxide (300 mM), eluent B water and eluent C sodium acetate (500mM) in sodium hydroxide (150 mM) at a flow rate of 0.5 mL/min using following gradient:

| Time (min) | A (%) | B (%) | C (%) |
|---|---|---|---|
| 0-1 | 2 | 98 | 0 |
| 1-12 | 5 | 95 | 0 |
| 12-27 | 34 | 46 | 20 |
| 27-27.1 | 0 | 0 | 100 |
| 27.1-32 | 0 | 0 | 100 |
| 32-32.1 | 100 | 0 | 0 |
| 32.1-37 | 100 | 0 | 0 |
| 37-37.1 | 2 | 98 | 0 |
| 37.1-43.0 | 2 | 98 | 0 |

The analytes were identified by comparing the retention times with their corresponding standards such as glucose, fructose, isomaltose, lactose, sucrose, isomaltotriose, maltose, panose and maltotriose. Method of calibration curve was used for the quantification comprising following concentrations of sugars: 5, 10, 15, 20, 25, 30, 40, 50 µg/mL. A Chromeleon^{™} 7.2 version chromatography software was used to acquire and process chromatographic data.

### Quantitative aroma analysis

Content of seven aroma compounds (**Table 2**) was determined using Head Space Solid Phase Micro Extraction in combination with Gas Chromatography and tandem Mass Spectrometry (HS-SPME-GC/MS/MS). Quantification was accomplished by Stable Isotope Dilution Assay (SIDA).

The cereal sample (1 g ± 0.002 g) was weighed into a 20 mL headspace vial. Ultrapure water (10 mL) and methanol solution of internal standards (20µL) were added together with a magnetic stir bar. The vial was closed with a screw cap and the mixture was homogenized by means of a vortex agitator for 5s and afterwards stirred for 15 minutes using a magnetic stirrer. The mixture was then centrifuged at 4000 rpm for 3 minutes and an aliquot of supernatant (5 mL) was transferred into a new 20 mL headspace vial and analysed by HS-SPME-GC/MS/MS. Each sample was prepared in duplicates by two independent work-ups.

For HS-SPME, the incubation (5 min) and extraction (30 min) were performed at 70 °C. DVB-CAR-PDMS fiber of 2cm (Supelco) was used for the extraction under agitator speed of 500 rpm. The fiber was injected into a GC-MS/MS instrument and aroma compounds were desorbed in split mode (ratio 5:1) at 250°C for 5 min.

For GC/MS/MS, an Agilent 7890A gas chromatograph and Agilent 7000 triple quadrupole mass spectrometer with chemical ionization source (CI) were used. Methane was used as a reactant gas. Gas chromatographic separations were achieved on a DB-624-UI column 60 m x 0.25 mm i.d., film thickness 1.4 µm (J&W Scientific). The temperature program of the oven started at 50 °C; the temperature raised by 5 °C/min to 200 °C and then by 30°C/min to 250°C and maintained constant for 10 min. Helium was used as a carrier gas with a constant flow of 1.0 mL/min.

The analytes were identified by comparing the retention times and fragmentation patterns with standards. The concentrations were calculated from the abundances (peak areas) of the ions selected for the analytes and the internal standards and the amounts of added internal standards. The quantities of the internal standards were adjusted to obtain a peak area ratio of analyte/standard between 0.2 and 5.

The ions (transitions) used for the quantification by stable isotope dilution assay are listed together with applied collision energies in Table 2.

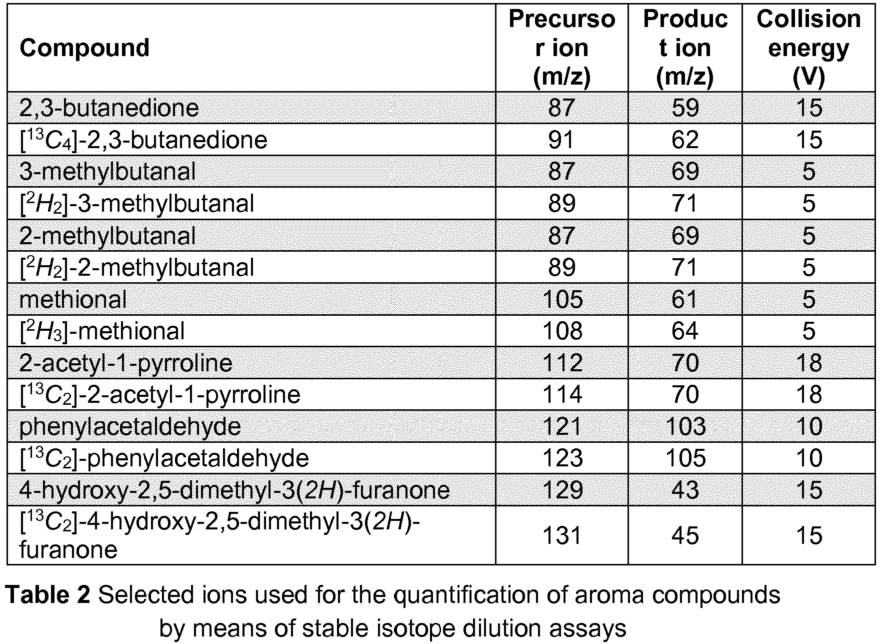

### Determination on Enzyme activity

α-amylase activity assay: 100 µL of buffer pH 5.8 (acetate buffer, 100mM), 100uL water 500uL of soluble starch solution 1 %w/v and 100 µL of properly diluted enzyme solution were incubated for 10min at 80°C. Reactions were stopped by adding 125 µL of the reaction mixtures to 125µL of DNS solution to determine reducing sugars described below. Control samples involved adding DNS reagent prior to the addition of the enzyme. Glucose standard curve was prepared accordingly. One unit of activity (1 U) is defined as the quantity of enzyme preparation releasing 1 µmol of glucose equivalents per minute under the defined conditions. All assays were prepared and analysed in duplicates.

Determination of reducing sugars using the 3,5-dinitrosalicylic acid (DNS) method:
DNS reagent: For 1L, 200mL of NaOH 8%w/v were added in 500mL mQ water followed by the addition of 10g of DNS. 402.7g of sodium potassium tartrate were slowly added under continuous stirring.
Procedure: 125 µL of sample were added in 125 µL of DNS solution and the mixture was boiled for 5min. 1mL mQ water was added and absorbance was measure at 540nm.

Transglucosidase/amyloglucosidase activity was assayed against p-nitrophenyl-α-D-glucoside (pNp-α-D-Gluc). 100 µL of pNp-α-D-Gluc stock solution 10mM in phosphate buffer (50mM, pH 6.0) were mixed with 100 µL of enzyme stock solution in the same buffer. The mixture was incubated for 10min at 40°C. The reaction was stopped by the addition of 2% w/v Trizma Base solution (pH 9.0). The release of p-nitrophenol (pNp) was measured by reading the absorbance at 400nm. pNp standard curve was prepared accordingly. Control samples without the addition of enzyme were prepared. One unit of activity (1 U) is defined as the quantity of enzyme releasing 1 µmol of pNp per minute under the defined conditions. All assays were prepared and analyzed in duplicate.

### Example 1: Enzymatic preparation of IMOs in refined wheat flour

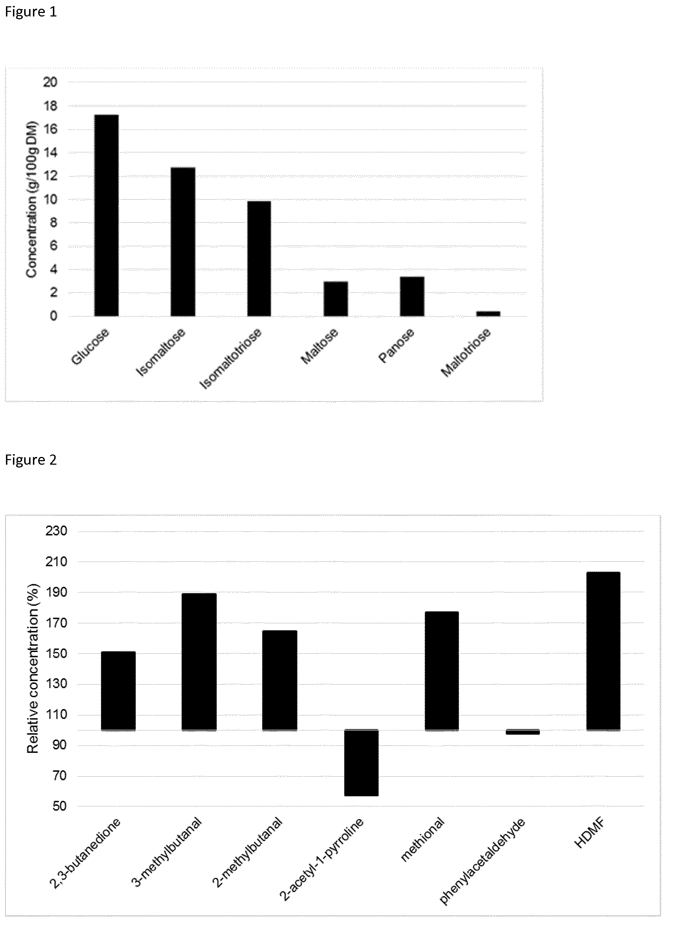

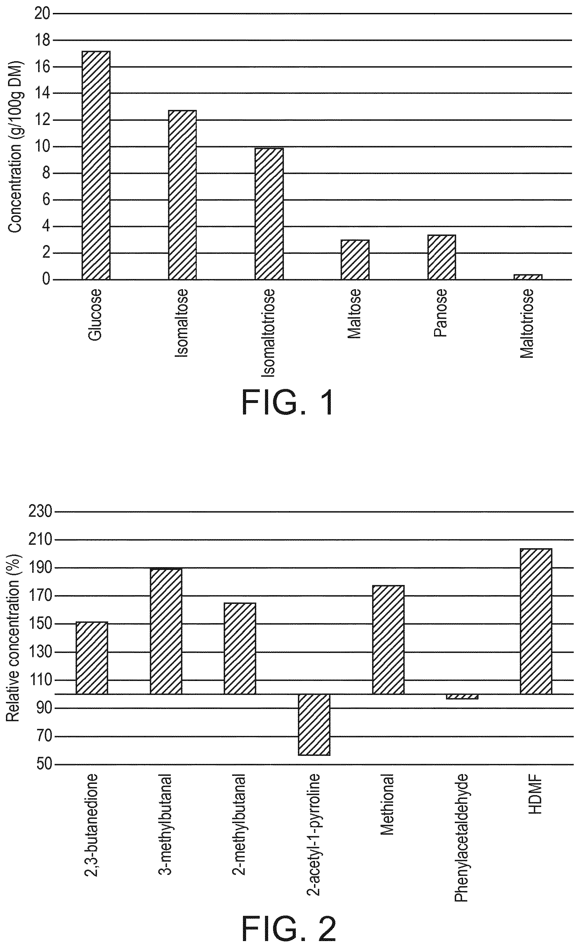

Water (27.4 kg) was heated to 57°C and then α-amylase (15800U/Kg_{WF}) and refined wheat flour (25kg) were added. The mixture was heated up to 75°C under stirring. Total residence time was 30 min including ramp time. Then the mixture was cooled down to 65°C and transglucosidase (TGase) was added in a solution (4400U/1.25L water). The mixture was incubated under the stirring at 65°C for 3 hours. The wet mix was then sterilized and enzymes deactivated with steam injection. The mixture was then frozen to -20°C and freeze-dried to obtain a final powder. Sugar profile in the obtained flour was determined by HPAEC-PAD method and it is shown on **Figure 1****.**

### Example 2: Production of wafers using wheat flour rich in IMOs

Enzymatically treated wheat flour prepared as described in Example 1 was evaluated in model wafer recipe. Reference formula (Wafer A) containing only standard (non-treated) flour was compared with formula where third of flour was replaced by treated flour as above described (Wafer B). Glucose and maltose was added to formula of Wafer A in order to match same content of these sugars in both recipes. Batters were prepared having the following formulation reported in Table 3:

**Table 3**

| Ingredient | Wafer A (g/batter) | Wafer B (g/batter) |
|---|---|---|
| Standard wheat flour | 70.0 | 50.0 |
| Enzymatically treated wheat flour | | 25.0 |
| Water | 78.0 | 78.0 |
| Fat | 2.8 | 2.8 |
| Sodium bicarbonate | 0.2 | 0.2 |
| Glucose | 4.3 | |
| Maltose monohydrate | 0.7 | |
| Total | 156.0 | 156.0 |

Wafers (9-11 g each) were prepared by baking at 160°C for 110s using laboratory equipment for production of wafer sheets (Hebenstreit). Three wafers from each recipe were grinded using a coffee grinder (Moulinex) and concentrations of selected odorants were determined by HS-SPME-GC/MS/MS method.

Relative concentration (%) of selected odorants in Wafer B as compared to Wafer A set at 100% is depicted in **Figure 2****.** Enzymatically treated flour containing IMOs resulted in increase of diacetyl (1.5x) and 4-hydroxy-2,5-dimethyl-3(2*H*)-furanone (HDMF, 2.0x), Strecker aldehydes except phenylacetaldehyde (from 1.7x to 1.9x) as compared to standard flour. On the other hand, amount of 2-acetyl-1-pyrroline decreased by 40%. The results corroborated the role of IMOs in the formation of Maillard derived odorants during wafer baking.

### Example 3: Enzymatic preparation of IMOs during cereal processing

Refined wheat flour was mixed with warm water (45°C) at TS 42% and the α-amylase was added at 15800U/Kg_{WF}. The wet mix was heated up to 75°C for 30 min. The mix was then transferred to another incubator and cooled below 65°C. Then, transglucosidase (TGase) was added at 176U/Kg_{WF} w and the mixture was incubated for 60 min under stirring. The wet mix was then sterilized and enzymes deactivated under steam injection. For the reference sample, an amyloglucosidase (AMG) was used instead of a transglucosidase at the same process conditions at a dose of 58U/Kgwr.

### Example 4: Production of cereal product by roller drying using flour rich in IMOs

Both enzymatically treated flours described in Example 3 were used for production of a cereal product. Two samples were prepared employing either TGase treated flour (Soup A) or AMG treated flour (Soup B). The product was prepared by roller-drying of the following formula reported in Table 4:

**Table 4**

| Ingredient | % (on DM of final product) |
|---|---|
| Refined wheat flour (untreated) | 18.56 |
| Enzymatically treated flour | 44.05 |
| Palm olein | 8.92 |
| Skimmed milk powder | 28.46 |

The enzymatically treated flour was mixed with the rest of the ingredients of the recipe at solid content 45% (only 17% of the total MSK of the recipe was added at this stage). The wet mix was sterilized by steam injection and then roller dried (180°C). The roller dryer operated at roller speed of 7.4 rpm. The dried product was milled (200µm) and mixed with the rest of the MSK.

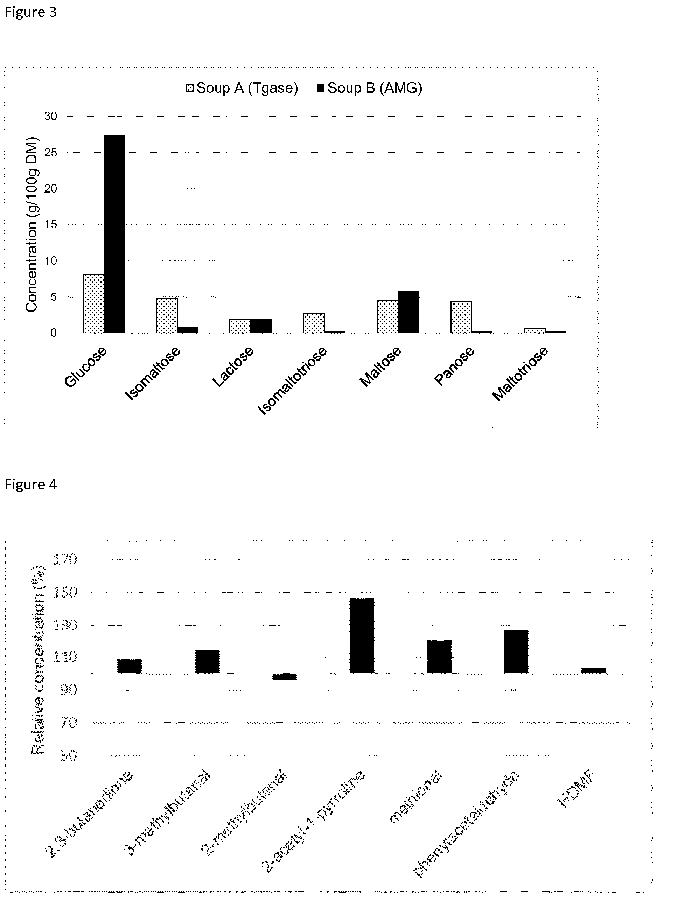

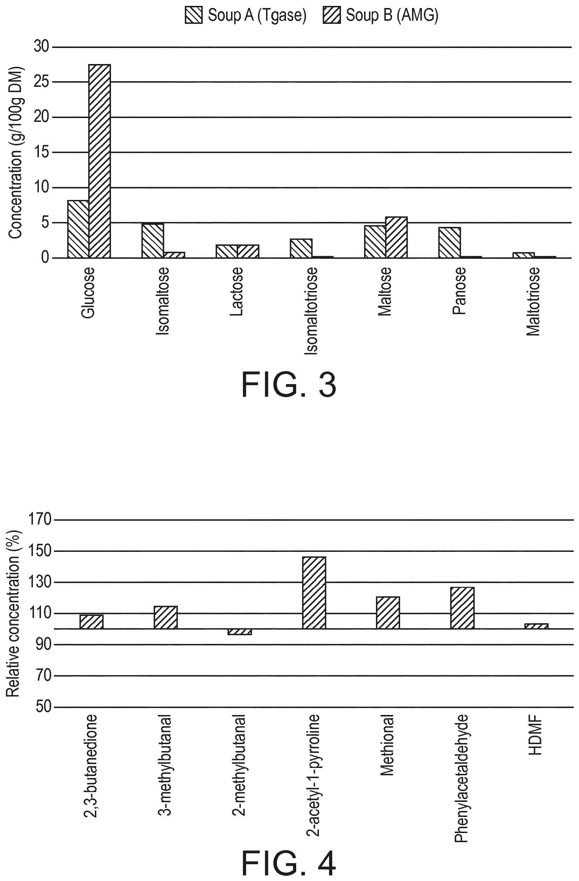

Sugar profiles determined in respective soups A and B (mixtures before roller drying) are compared on **Figure 3****.** Relative concentrations (%) of selected odorants in the finished cereal product prepared with two different enzymatic preparations are shown on **Figure 4****.**

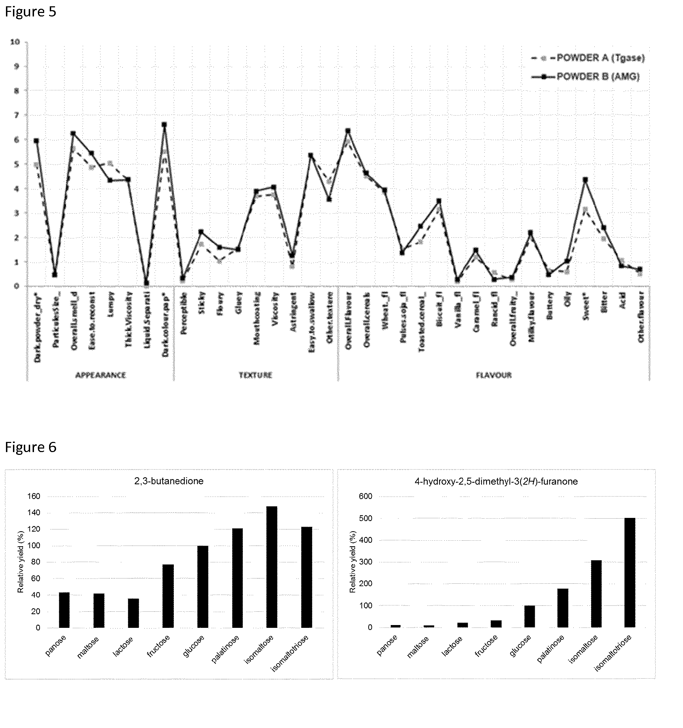

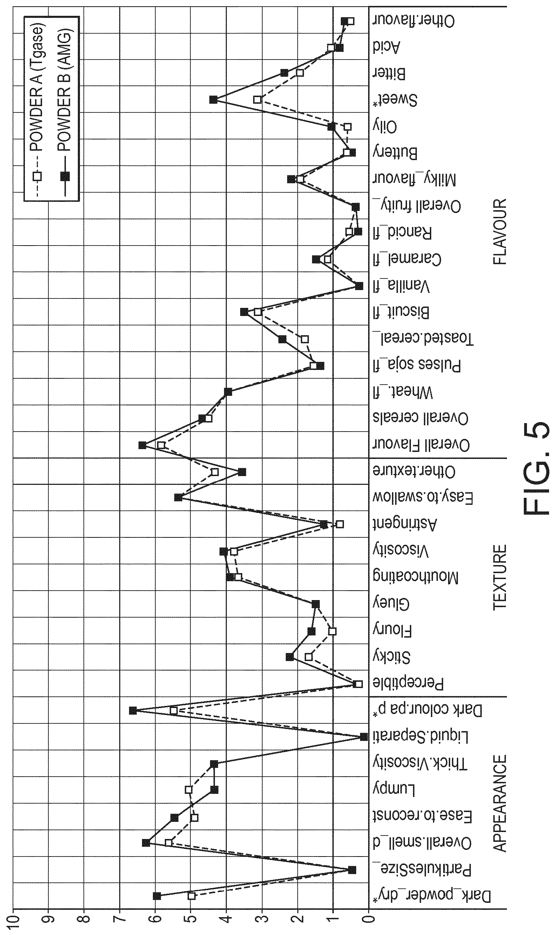

Sugar analysis (soups before roller-drying) revealed more than three times higher amount of glucose in the AMG treated flour (Soup B) than in the sample produced with TGase treated flour (Soup A). On the other, only very small amounts of IMOs were detected in Soup B (AMG) while Soup A (TGase) contained isomaltose (4.8 g/100g), isomaltotriose (2.7 g/100g) and other higher IMOs. Quantitative aroma analysis revealed slightly higher content of majority of monitored odorants in the Powder A prepared from TGase treated flour. Surprisingly regardless of the reduction in sugars known to be key in the process of flavour development, sensory analysis did not show any significant flavour differences except sweetness that was lower in Powder A (**Figure 5**). These observations are indeed surprising as higher formation of Maillard derived odorants and consequently higher flavour intensity could be expected in the recipe with more glucose. This demonstrates high potential of IMOs to generate flavour during the drying which is capable to sufficiently compensate reduced amount of glucose.

### Example 5: Evaluation of selected oligosaccharides in simple Maillard model system and comparison with other reducing sugars

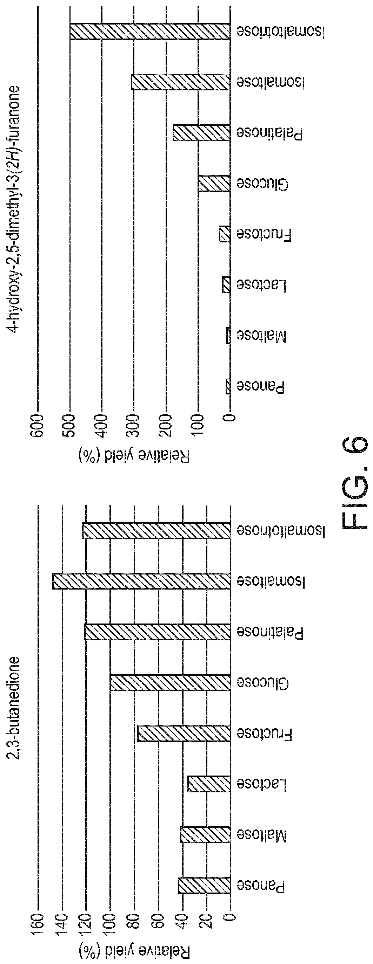

Potential of isomaltose, isomaltotriose, panose and palatinose to generate 2,3-butanedione and 4-hydroxy-2,5-dimethyl-3(2*H*)-furanone (HDMF) was evaluated in simple Maillard model system and compared with other reducing sugars such as glucose, fructose, lactose and maltose. Equimolar amounts of sugar and glycine (100 µmol) and 1 ml phosphate buffer (pH7, 0.1 M) were mixed in a 20 mL headspace vial.The vial was heated in the oil bath at 120°C for 20min. Three heating trials were carried out for each sugar-glycine system. Concentrations of odorants in the reaction mixture were directly determined after addition of labelled standards by HS-SPME-GC/MS/MS method. Yields of both odorants (mg/mol sugar) determined in each sugar-glycine system were expressed relatively (%) to glucose-glycine system that was set arbitrary to 100 % **(****Figure 6**).

Also under wet conditions, potential of isomaltose, isomaltotriose and palatinose to generate target odorants was superior to other sugars. Isomaltose (disaccharide), for instance, generated 1.5 folds more 2,3-butanedione and 3 folds more HDMF than glucose (monosaccharide). Surprisingly, isomaltotriose (trisaccharide) yielded 64% more HDMF than isomaltose (disaccharide) and 5 folds more than glucose (monosaccharide). Palatinose generated 20% more 2,3-butanedione and almost double amount of HDMF than glucose.

This is indeed surprising as reactivity of sugars in Maillard reaction supposes to decrease with increasing number of monosaccharide units. Potential of disaccharides with 1→4 linkages such as maltose and lactose as well as trisaccharide panose with linkage Glc-(1→6)-Glc-(1→4)-Glc to generate target odorants was far below of potential of glucose. This study thus demonstrated that 1→6 linkage between reducing end monosaccharide and the adjacent monosaccharide is absolutely key for the generation of target odorants.

### Example 6: Evaluation of isomaltose and palatinose during wafer baking - comparison with glucose and maltose

Findings from simple Maillard model system (Example 5) were validated in wheat wafers (food model system). Equimolar amount of glycine and either glucose or maltose or isomaltose or palatinose (2.5 mmol) were spiked to the batter. A wafer with addition of glycine alone (2.5 mmol) was also prepared. Batters were prepared having the following formulation reported in table 5:

**Table 5**

| Ingredient | g ingredient/100g batter | | | | |
|---|---|---|---|---|---|
| | A | B | C | D | E |
| Wheat flour | 47.69 | 47.24 | 46.79 | 46.83 | 46.83 |
| Water | 50.00 | 50.00 | 50.00 | 50.00 | 50.00 |
| Fat | 2.00 | 2.00 | 2.00 | 2.00 | 2.00 |
| Sodium bicarbonate | 0.12 | 0.12 | 0.12 | 0.12 | 0.12 |
| Glycine | 0.19 | 0.19 | 0.19 | 0.19 | 0.19 |
| Glucose | | 0.45 | | | |
| Maltose monohydrate | | | 0.90 | | |
| Isomaltose | | | | 0.86 | |
| Palatinose | | | | | 0.86 |
| Total | 100.00 | 100.00 | 100.00 | 100.00 | 100.00 |

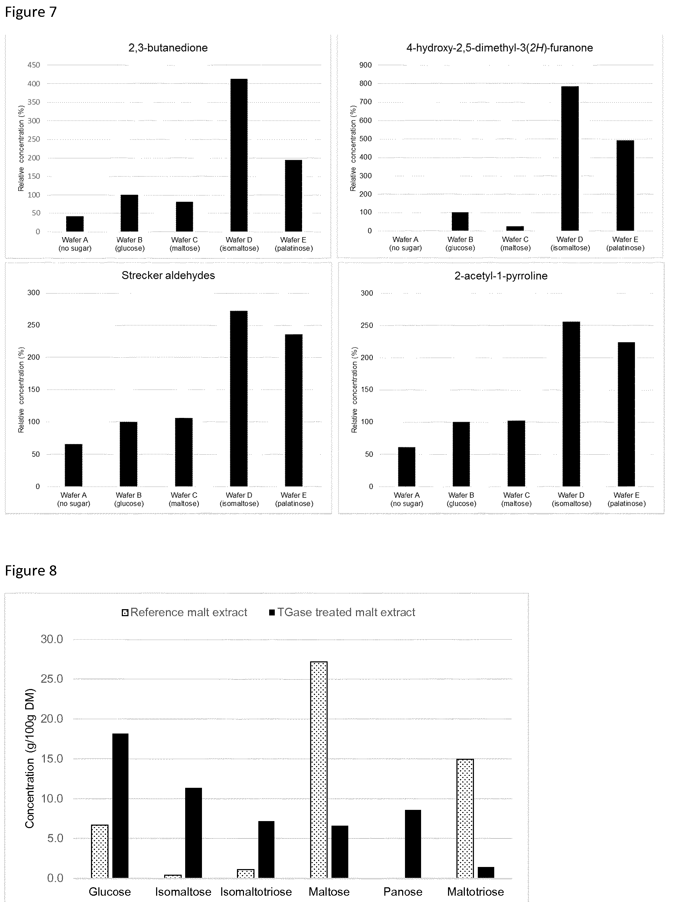

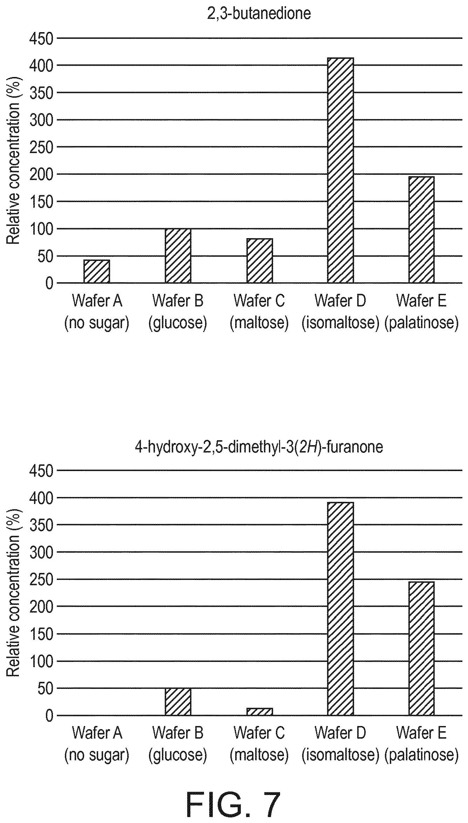

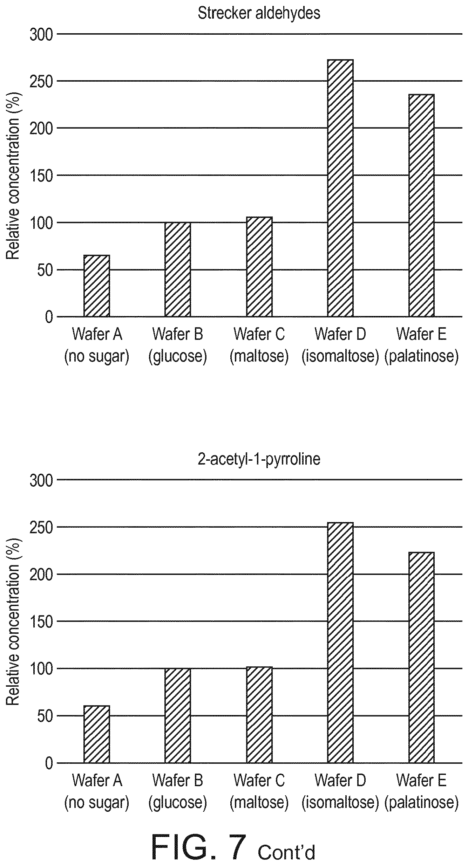

Wafers (9-11 g each) were prepared by baking at 160°C for 110s using laboratory equipment for production of wafer sheets (Hebenstreit). Three wafers from each recipe were grinded using a coffee grinder (Moulinex) and concentrations of selected odorants were determined by HS-SPME-GC/MS/MS method. The data were normalized and expressed as relative concentration (%) while concentration in Wafer B containing glucose was arbitrary set to 100 % (**Figure 7**).

The results from wafer trials confirmed the findings from binary Maillard model system and corroborated the superior potential of isomaltose and palatinose as compared to glucose and maltose. Addition of isomaltose/palatinose resulted in higher yields of 2,3-butanedione (4.1x/1.9x), HDMF (7.9x/4.9), Strecker aldehydes (Strecker aldehydes refer to sum of 2- and 3- methylbutanal, methional and phenylacetaldehyde) (2.7x/2.4x) and 2-acetyl-1-pyrroline (2.6x/2.2x) as compared to addition of glucose.

### Example 7: Generation of IMOs in malt extract using an enzymatic process

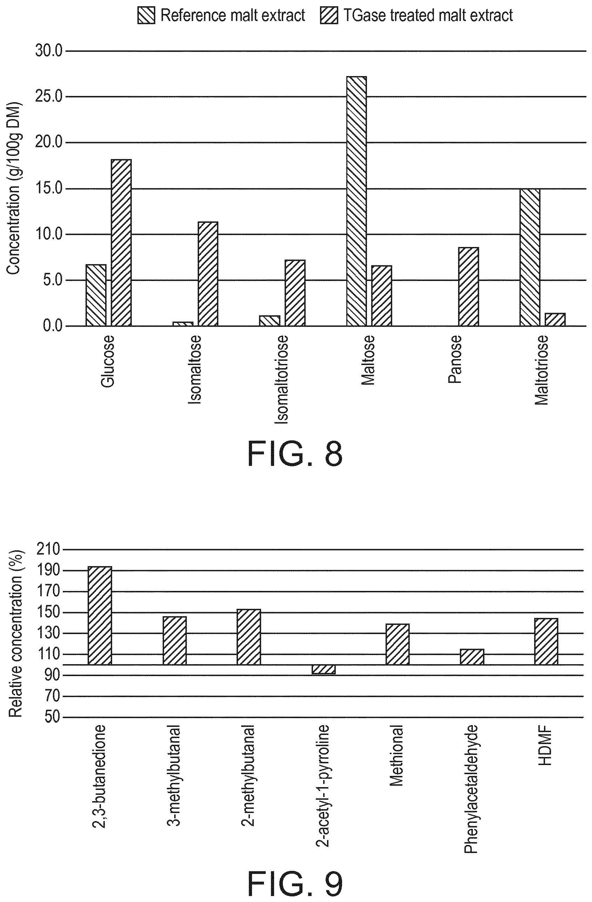

250g of commercial malt extract syrup (80.5% total solid content) and 250g water was mixed in jacket-heated kitchen blender (Thermomix). The mixture was stirred (level 2) and heated up to 55°C (set point) in approximately 5 min. When temperature was stabilized, 21 U of translgucosidase were added. The mixture was then heated at 55°C (set point) for 3 hours under the stirring (level 2). The temperature of the mixture over the treatment ranged from 57.3 to 57.7°C. After the treatment, the mixture was diluted with 500g water and freeze-dried.Same treatment of malt extract, but without addition of TGase was also conducted in order to produce relevant reference (negative control). Sugar profile (**Figure 8**) was determined in both malt extract powders using HPAEC-PAD method after the following sample preparation: freeze-dried products were diluted in water (4% w/w) and boiled up for 10min to ensure enzyme deactivation. Samples were further diluted in water for the HPAEC analysis.

The treatment of malt extract with TGase resulted in significant changes of sugar composition. Maltose and maltotriose were reduced, while glucose, isomaltose, isomaltotriose and panose were dramatically increased and/or synthesized *de novo*.

### Example 8: Evaluation of malt extract rich in IMOs upon wet heating with glycine

Both malt extract powders prepared as described in Example 7 were evaluated upon wet heating with glycine. Malt extract powder (5g) and glycine (0.25g) were dissolved in water (5g). 1±0.1g of the mixture was transferred into 20 mL headspace vial, closed with a screw cap and heated in an oil bath at 120°C for 20min. The vial was then cooled down in an ice bath. Three parallel heating experiments were conducted with each malt extract. Concentrations of odorants in the reaction mixtures were determined after addition of 5 mL water and solution of labelled standards using HS-SPME-GC/MS/MS method.

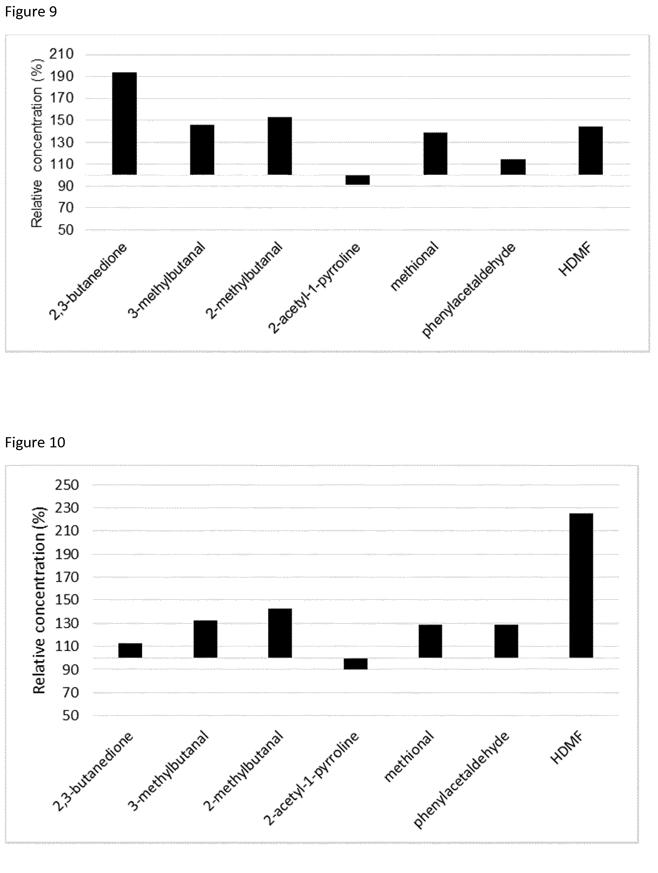

Relative concentration (%) of selected odorants in heated mixtures of glycine-Tgase treated malt extract and glycine-reference malt extract (100%) is depicted in **Figure 9****.** Apart from 2-acetyl-1-pyrroline, all monitored odorants were increased in Tgase treated malt extract (increase by factor from 1.1 to 1.9).

### Example 9: Evaluation of malt extract rich in IMOs upon wafer baking

Both malt extract powders prepared as described in Example 7 were evaluated in model wafer recipe. Reference formula (Wafer A) containing reference malt extract powder was compared with formula containing same amount of malt extract powder treated with TGase (Wafer B). Batters were prepared having the following formulation reported in table 6:

**Table 6**

| Ingredient | g/batter | |
|---|---|---|
| | Wafer A | Wafer B |
| Reference malt extract powder | 15 | |
| TGase treated malt extract powder | | 15 |
| Wheat flour | 60 | 60 |
| Water | 78 | 78 |
| Fat | 2.8 | 2.8 |
| Sodium bicarbonate | 0.2 | 0.2 |
| Total | 156 | 156 |

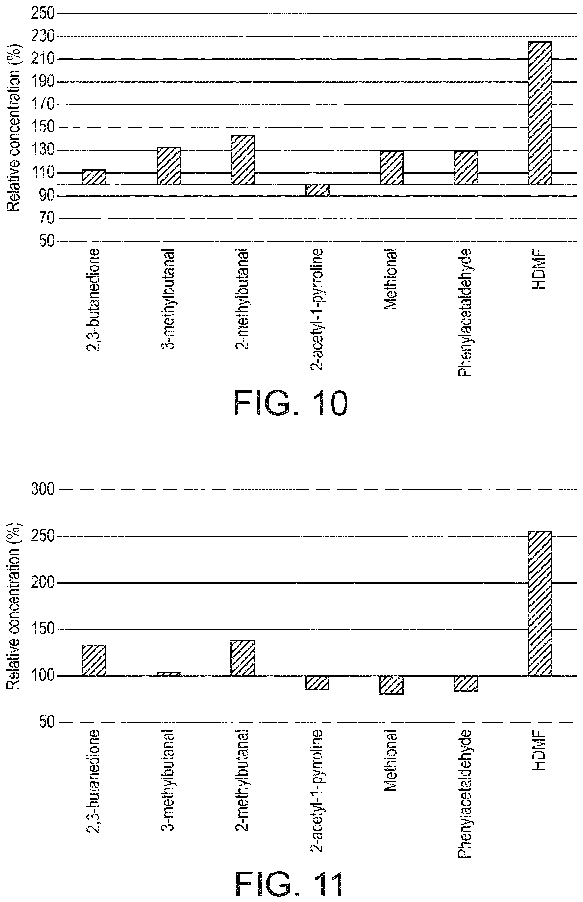

Wafers (9-11 g each) were prepared by baking at 160°C for 110s using laboratory equipment for production of wafer sheets (Hebenstreit). Three wafers from each recipe were grinded using a coffee grinder (Moulinex) and concentrations of selected odorants were determined by HS-SPME-GC/MS/MS method. Relative concentration (%) of selected odorants in Wafer B as compared to Wafer A set at 100% is depicted in **Figure 10****.** Apart from 2-acetyl-1-pyrroline, all monitored odorants were slightly increased in Wafer A containing TGase treated malt extract (increase by factor from 1.1 to 1.5), the highest increase (factor 2.3) was detected for HDMF.

### Example 10: Production of cocoa and malt beverage with malt extract rich in IMOs

Both malt extract powders prepared as described in Example 7 were evaluated during preparation of cocoa and malt beverage. Wet mixes were prepared having the following formulation reported in Table 7:

**Table 7**

| Ingredient | g/wet mix | |
|---|---|---|
| | Mix A | Mix B |
| Reference malt extract powder | 83.0 | |
| TGase treated malt extract powder | | 83.0 |
| Skimmed milk powder | 76.9 | 76.9 |
| Sugar | 57.2 | 57.2 |
| Fat | 34.4 | 34.4 |
| Cocoa powder | 17.5 | 17.5 |
| Water | 31.0 | 31.0 |
| Total | 300.0 | 300.0 |

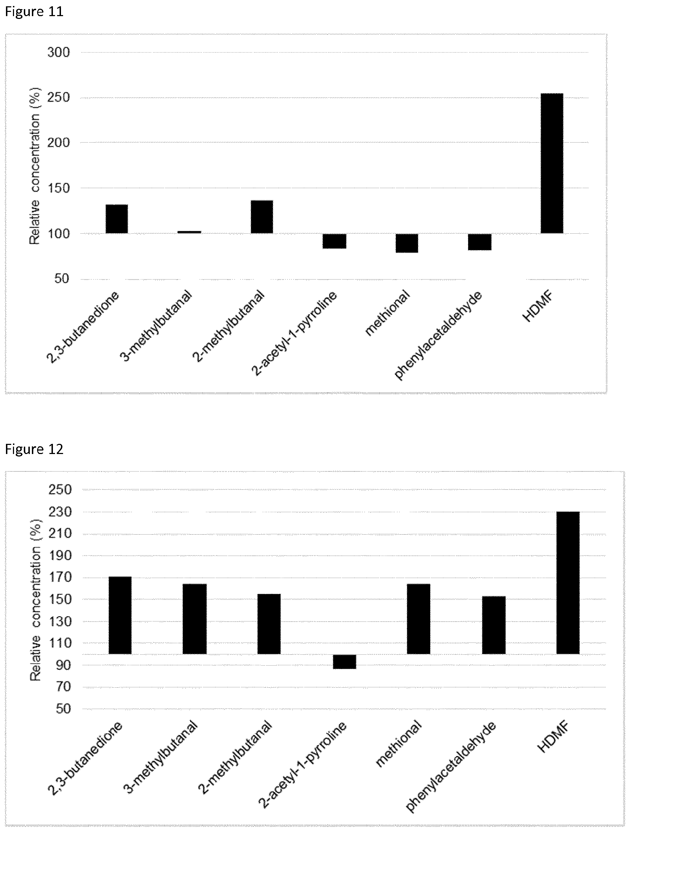

The wet mix with solid content of about 88% was prepared in jacket-heated kitchen blender (Thermomix) under vigorous stirring and heating (75°C) for 5 min. 100±2g of the wet mix was spread on the polyester support in a layer of about 4 mm. The wet mix was dried in a vacuum oven (Memmert) on a plate heated at 150°C for 25 min under the vacuum of about 30 mbar. The cake after the drying was crashed and milled in kitchen robot with blades (Pitec). The obtained powder (250 mg) was directly analysed after the addition of labelled standards and 5 mL using SPME-GC-MS/MS method. Relative concentration (%) of selected odorants in Powder B as compared to Powder A set at 100% is depicted in **Figure 11****.** Apart from HDMF, only small differences in concentrations of monitored odorants were observed between the powders (relative concentrations in Powder B ranged from 79% to 137% as compared to Powder A set at 100%). Significant increase (factor 2.5) was detected for HDMF in Powder B.

### Example 11: Production of cocoa and malt beverage with palatinose

Palatinose (isomaltulose) was used to partially replace sugar in the formula of cocoa and malt beverage (Mix B). The aroma content of this formula was compared with the standard formula (Mix A). The amount of palatinose in the recipe was intentionally chosen to replace 30% of sugars (total mono- and di-saccharides) and thus meet the requirements for claiming on its health benefits as approved by EFSA recently. Wet mixes were prepared having the following formulation reported in Table 8:

**Table 8**

| Ingredient | g/wet mix | |
|---|---|---|
| | Mix A | Mix B |
| Malt extract syrup (TS 80.5%) | 100.5 | 100.5 |
| Skimmed milk powder | 76.9 | 76.9 |
| Sugar | 57.2 | 19.8 |
| Palatinose | | 37.4 |
| Fat | 34.4 | 34.4 |
| Cocoa powder | 17.5 | 17.5 |
| Water | 13.5 | 13.5 |
| Total | 300.0 | 300.0 |

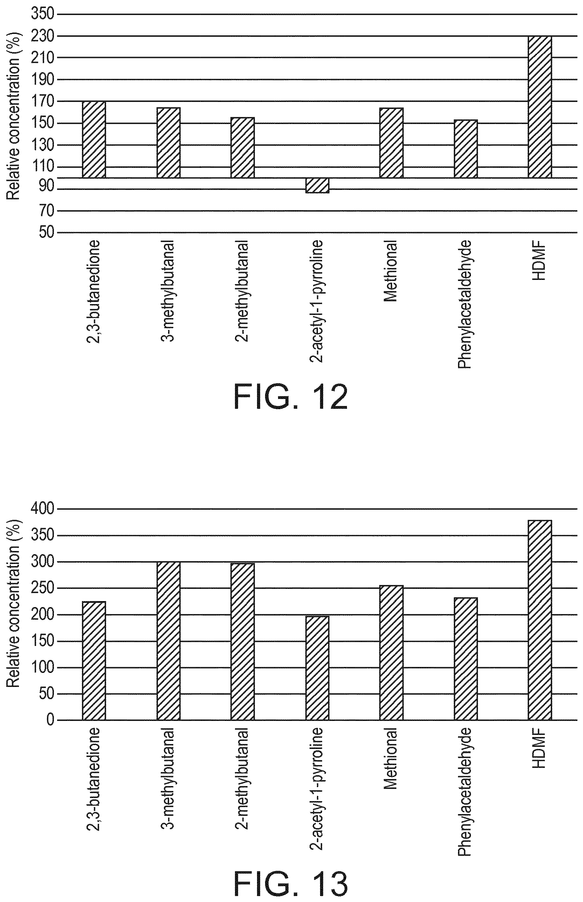

The preparation of wet mix and the drying was conducted as described in Example 10. The obtained powder (250 mg) was directly analysed after the addition of labelled standards and 5 mL water using SPME-GC-MS/MS method. Relative concentration (%) of selected odorants in Powder B as compared to Powder A set at 100% is depicted in **Figure 12****.** Apart from 2-acetyl-1-pyrroline, all odorants were increased (by factor from 1.5 to 1.7); the highest increase (factor 2.3) was detected for HDMF.

### Example 12: Production of cereal product with palatinose by roller drying - comparison with glucose

Addition of palatinose was evaluated during a roller drying of cereal product and compared with addition of glucose dosed at the same molar amount. Two model for formulas were prepared having the following composition reported in table 9:

**Table 9**

| Ingredient | % (DM) | |
|---|---|---|
| | Formula A | Formula B |
| flour | 65.47 | 62.97 |
| Sugar | 29.00 | 29.00 |
| Honey | 2.31 | 2.31 |
| Salts | 0.72 | 0.72 |
| Glucose | 2.50 | |
| Isomaltulose (palatinose) | | 5.00 |

The ingredients were homogenized with water for 10 min using a batch mixer (Papenmeier) with jacket heated at 60°C. The wet mix having 50% total solid content was then sterilized under steam injection and then roller dried (170°C) at 8 rpm roll speed. The dried product was milled (200µm). The obtained powder had a moisture content of about 2% to 3%.

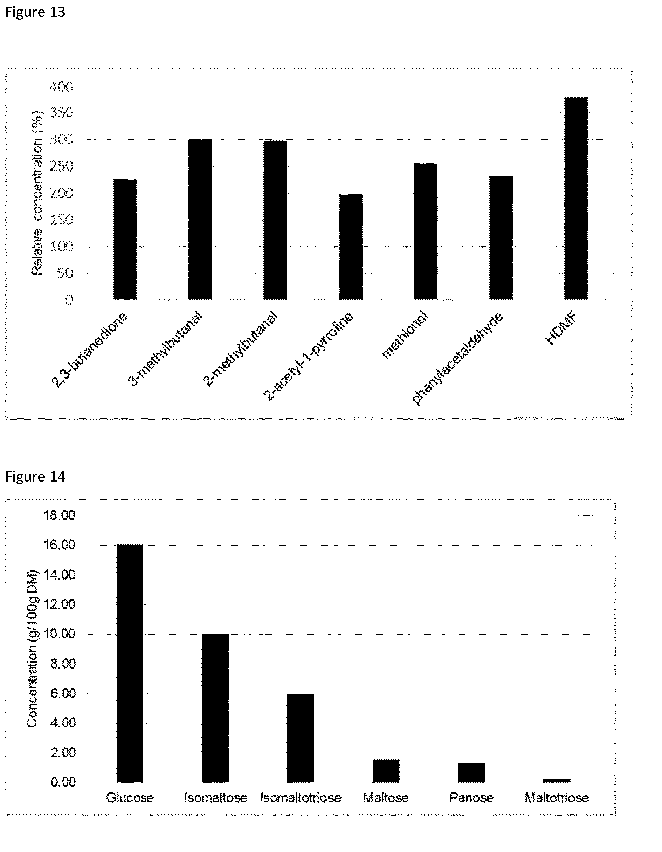

Both cereal products were tasted as cereal shakes after reconstitution of 18g powder in 220 warm milk (60°C). A significantly improved flavour was detected in Formula B as compared to Formula A. Formula B revealed significantly higher intensity of biscuity and toasty character and was richer in overall flavour. Concentrations of selected odorants in both powders were determined by HS-SPME-GC/MS/MS method. Relative concentration (%) of selected odorants in Formula B as compared to Formula A set at 100% is depicted in **Figure 13****.** In comparison with Formula A, monitored odorants were increased in Formula B by factor from 1.8 to 3.8. HDMF revealed again the highest increase (factor 3.8).

### Example 13: Enzymatic preparation of IMOs in whole grain wheat flour

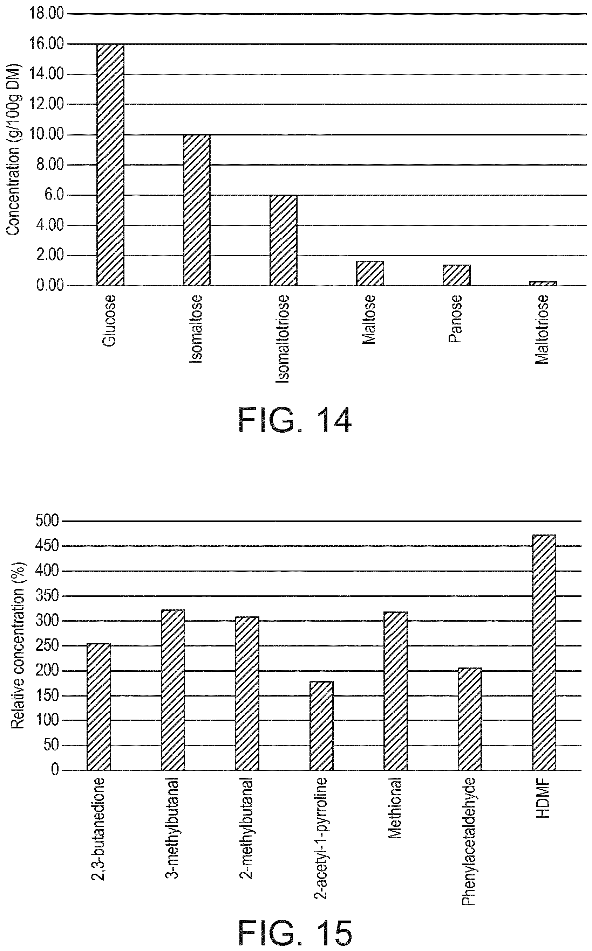

Preparation was carried out starting from whole grain wheat flour according to a similar procedure as described in Example 1 for refined wheat flour. Fig. 14 illustrates the corresponding sugar profile obtained.

### Example 14: Production of cereal product by extrusion using whole grain wheat flour rich in IMOs

Enzymatically treated whole grain wheat flour prepared as described in Example 13 was evaluated in model wheat based recipe upon extrusion. Reference formula (Extrudate A) containing only standard (non-treated) whole grain wheat flour was compared with formula (Extrudate B) where standard flour was partially replaced by treated flour. The two model formulas were prepared according to recipes in Table 10:

**Table 10**

| Ingredient | % formula | |
|---|---|---|
| | Extrudate A | Extrudate B |
| Whole grain wheat flour | 45.7 | 27.7 |
| Refined Wheat flour | 21.8 | 22.7 |
| Corn Semolina | 20.5 | 21.3 |
| Enzymatically treated whole grain wheat flour | | 19.8 |
| Sugar | 5 | 1.5 |
| Malt extract | 5 | 5 |
| Vegetable Oil | 1.7 | 1.7 |
| Salt | 0.2 | 0.2 |
| Vanillin | 0.05 | 0.05 |

Extrusion trials were conducted on an extruder. The extruder operated with a dry mix throughput of 30 kg/h, a screw speed of 460 rpm, a moisture content of 17% and a melt temperature of 120 °C. The extruded products were dried in an oven at 100 °C for 1.5 min to reach final moisture of about 3%.

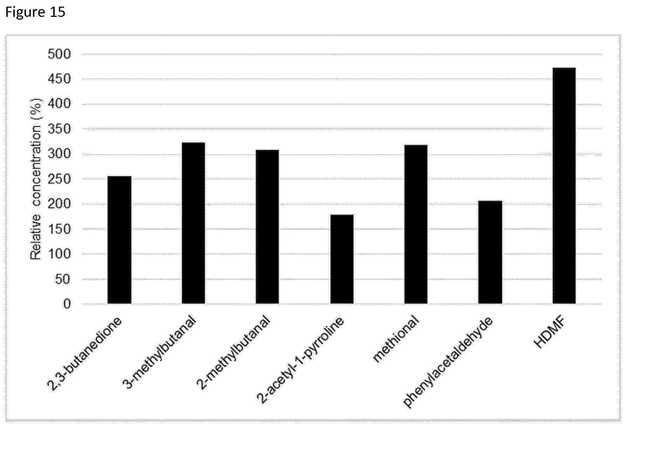

The extrudate was grinded using a coffee grinder and concentrations of selected odorants were determined by HS-SPME-GC/MS/MS method. Relative concentration (%) of odorants in Extrudate B as compared to Extrudate A set at 100% is depicted in Figure 15. All monitored odorants were increased in Extrudate B containing TGase treated whole grain wheat flour (increase by factor from 1.6 to 4.7), the highest increase (factor 4.7) was detected for HDMF. As compared to Extrudate A, flavour of Extrudate B was found significantly richer with pronounced caramel note.

## Claims

1. Use of an iso-oligosaccharide of formula (I)
R--------------------B (I)
Wherein
R and B are connected via a 1→6 glycosidic linkage;
B is an aldohexose or ketohexose monosaccharide unit comprising the carbon 6 bearing the -OH group forming the glycosidic linkage between R and B;
R is a group X-A-*
wherein A is an optionally functionalized monosaccharide unit comprising the carbon 1 bearing the -OH group forming the glycosidic linkage;
wherein the sign * indicates the point of attachment for the group R to B;
wherein X is connected to A via a covalent bond and is selected in the group consisting of: hydrogen, monosaccharide, and linear or branched oligosaccharide, wherein such monosaccharide or oligosaccharides may be further functionalized;
or mixtures thereof
as flavour precursors, for example in Maillard or caramelization reactions, for generating at least one odorant selected in the group consisting of:
4-hydroxy-2,5-dimethyl-3(2*H*)-furanone;
2,3-butanedione;
2- and 3-methylbutanal;
Methional;
Phenylacetaldehyde;
2-acetyl-1-pyrroline;
And mixtures thereof.

2. Use according to claim 1 wherein the iso-oligosaccharide of formula (I) is a iso-oligosaccharide of formula (IB1): 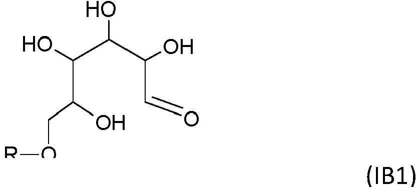 preferably, wherein the iso-oligosaccharide of formula (IB1) is an isomaltooligosaccharide or mixtures thereof.

3. Use according to claim 1 wherein the iso-oligosaccharide of formula (I) is a iso-oligosaccharide of formula (IB2): 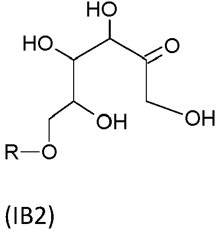 preferably wherein the iso-oligosaccharide of formula (IB2) is 6-O-α-D-glucopyranosyl- D-fructose (isomaltulose or Palatinose^{™}).

4. Use according to anyone of claims 1 to 3 wherein R for iso-oligosaccharides of formula (I) is not functionalized,
or
wherein R for iso-oligosaccharides of formula (I) is functionalized so that one or more of the -OH groups in the monosaccharide unit R are absent (replaced by an hydrogen atom) or replaced with a moiety selected from the group consisting of: A-O-* and A-*, wherein A is as above defined and the asterisk sign (*) represents the point where the group A-O- or A- is linked to the remaining part of compounds of formula (I) via the carbon atom originally bearing the -OH group that is now replaced with the moiety A-* or A-O-*.

5. Use according to anyone of claims 1 to 4 wherein the iso-oligosaccharide of formula (I) is selected in the group consisting of:
| |
|---|
| 6-*O*-β-D-glucopyranosyl- β-D-glucopyranose; |
| 6-*O*-α-D-galactopyranosyl-α-D-glucopyranose; |
| 6-*O*-α-D-galactopyranosyl- β-D-glucopyranose; |
| 6-*O*-α-D-glucopyranosyl-α-D-glucopyranose; |
| 6-*O*-β-D-galactopyranosyl- D-galactopyranose; |
| 6-*O-*α-D-galactopyranosyl- D-galactopyranose; |
| 6-*O*-β-D-galactopyranosyl- D-glucopyranose; |
| 6-*O*-α-D-galactopyranosyl- D-glucopyranose; |
| 6-*O*-β-D-qlucopyranosyl- D-glucopyranose; |
| 6-*O*-α-D-mannopyranosyl- D-glucopyranose; |
| 6-*O*-α-D-glucopyranosyl- D-glucopyranose; |
| 6-*O*-α-D-glucopyranosyl- D-glucose; |
| 6-*O*-β-D-qlucopyranosyl- D-glucose; |
| 6-*O*-α-D-galactopyranosyl- D-glucose; |
| 6-*O*-β-D-galactopyranosyl- D-galactose; |
| 6-*O*-α-D-mannopyranosyl- D-mannose; |
| 6-*O*- α-D-galactopyranosyl- D-galactose; |
| 6-*O*-β-D-qalactopyranosyl- D-glucose; |
| 6-*O*-β-D-mannopyranosyl- D-mannose; |
| 6-*O*-β-D-glucopyranosyl- D-mannose; |
| 6-*O-*α-D-glucopyranosyl- D-fructose; |
| 6-*O*-β-D-glucopyranosyl- D-fructose; |
| 6-*O*-α-D-galactopyranosyl- D-fructose; |
| *O-*α-D-glucopyranosyl-(1→6)-*O-*α-D-glucopyranosyl-(1→6)- D-glucose; |
| *O*-α-D-galactopyranosyl-(1→6)-*O*-α-D-galactopyranosyl-(1→6)- D-glucose; |
| *O-*α-D-glucopyranosyl-(1→4)-*O-*α-D-glucopyranosyl-(1→6)- D-glucose; |
| *O*-α-D-glucopyranosyl-(1→6)-*O*-α-D-glucopyranosyl-(1→6)-*O*-α-D-glucopyranosyl-(1→6)- D-glucose; |
| 6-*O*-α-D-glucopyranosyl-α-D-fructofuranose; |
| 6-*O*-α-L-Rhamnopyranosyl- D-glucose; |
| 6-*O*-α-L-Rhamnopyranosyl- D-fructose; |
or mixtures thereof.

## Patentansprüche

1. Verwendung eines Iso-Oligosaccharids der Formel (I)
R-----------------B (I)
Wobei
R und B über eine 1→6-glycosidische Verknüpfung verbunden sind;
B eine Aldohexose- oder Ketohexosemonosaccharid-Einheit ist, umfassend das Kohlenstoffatom 6, das die -OH-Gruppe trägt, die die glycosidische Verknüpfung zwischen R und B ausbildet;
R eine Gruppe X-A-* ist,
wobei A eine gegebenenfalls funktionalisierte Monosaccharid-Einheit ist, umfassend das Kohlenstoffatom 1, das die -OH-Gruppe trägt, die die glycosidische Verknüpfung ausbildet;
wobei das Zeichen * den Anlagerungspunkt für die Gruppe R bis B anzeigt;
wobei X mit A über eine kovalente Bindung verbunden ist und ausgewählt ist aus der Gruppe bestehend aus: Wasserstoff, Monosaccharid und linearem oder verzweigtem Oligosaccharid, wobei ein derartiges Monosaccharid oder derartige Oligosaccharide weiter funktionalisiert sein können;
oder Mischungen davon
als Geschmacksvorläufer, zum Beispiel in Maillard- oder Karamellisierungsreaktionen, zum Erzeugen mindestens eines Duftstoffs, der ausgewählt ist aus der Gruppe bestehend aus:
4-Hydroxy-2,5-dimethyl-3(2*H*)-furanon;
2,3-Butandion;
2- und 3-Methylbutanal;
Methional;
Phenylacetaldehyd;
2-Acetyl-1-pyrrolin;
und Mischungen davon.

2. Verwendung nach Anspruch 1, wobei das Iso-Oligosaccharid der Formel (I) ein Iso-Oligosaccharid der Formel (IB1) ist: 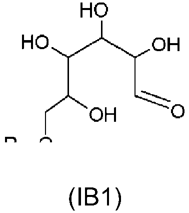 vorzugsweise, wobei das Iso-Oligosaccharid der Formel (IB1) ein Iso-Maltooligosaccharid oder Mischungen davon ist.

3. Verwendung nach Anspruch 1, wobei das Iso-Oligosaccharid der Formel (I) ein Iso-Oligosaccharid der Formel (IB2) ist: 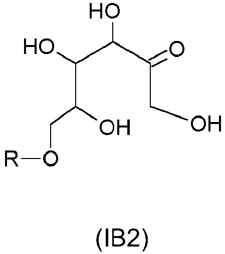 vorzugsweise wobei das Iso-Oligosaccharid der Formel (IB2) 6-*O*-α-D-Glucopyranosyl-D-fructose (Isomaltulose oder Palatinose^{™}) ist.

4. Verwendung nach einem der Ansprüche 1 bis 3, wobei R für Iso-Oligosaccharide der Formel (I) nicht funktionalisiert ist,
oder
wobei R für Iso-Oligosaccharide der Formel (I) funktionalisiert ist, so dass eine oder mehrere der -OH-Gruppen in der Monosaccharid-Einheit R fehlen (ersetzt durch ein Wasserstoffatom) oder durch einen Rest ersetzt sind, der ausgewählt ist aus der Gruppe bestehend aus: A-O-* und A-*, wobei A wie oben definiert ist und das Sternchen (*) den Punkt darstellt, an dem die Gruppe A-O- oder A- mit dem verbleibenden Teil der Verbindungen der Formel (I) über das Kohlenstoffatom verknüpft ist, das ursprünglich die -OH-Gruppe trug, die nun durch den Rest A-* oder A-O-* ersetzt ist.

5. Verwendung nach einem der Ansprüche 1 bis 4, wobei das Iso-Oligosaccharid der Formel (I) ausgewählt ist aus der Gruppe bestehend aus:
| |
|---|
| 6-*O*-β-D-Glucopyranosyl-β-D-glucopyranose; |
| 6-*O*-α-D-Galactopyranosyl-α-D-glucopyranose; |
| 6-*O*-α-D-Galactopyranosyl-β-D-glucopyranose; |
| 6-*O*-α-D-Glucopyranosyl-α-D-glucopyranose; |
| 6-*O*-β-D-Galactopyranosyl-D-galactopyranose; |
| 6-*O*-α-D-Galactopyranosyl-D-galactopyranose; |
| 6-*O*-β-D-Galactopyranosyl-D-glucopyranose; |
| 6-*O*-α-D-Galactopyranosyl-D-glucopyranose; |
| 6-*O*-β-D-Glucopyranosyl-D-glucopyranose; |
| 6-*O*-α-D-Mannopyranosyl-D-glucopyranose; |
| 6-*O*-α-D-Glucopyranosyl-D-glucopyranose; |
| 6-*O*-α-D-Glucopyranosyl-D-glucose; |
| 6-*O*-β-D-Glucopyranosyl-D-glucose; |
| 6-*O*-α-D-Galactopyranosyl-D-glucose; |
| 6-*O*-β-D-Galactopyranosyl-D-galactose; |
| 6-*O*-α-D-Mannopyranosyl-D-mannose; |
| 6-*O*-α-D-Galactopyranosyl-D-galactose; |
| 6-*O*-β-D-Galactopyranosyl-D-glucose; |
| 6-*O*-β-D-Mannopyranosyl-D-mannose; |
| 6-*O*-β-D-Glucopyranosyl-D-mannose; |
| 6-*O*-α-D-Glucopyranosyl-D-fructose; |
| 6-*O*-β-D-Glucopyranosyl-D-fructose; |
| 6-*O*-α-D-Galactopyranosyl-D-fructose; |
| *O*-α-D-Glucopyranosyl-(1→6)-*O*-α-D-glucopyranosyl-(1→6)-D-glucose; |
| *O*-α-D-Galactopyranosyl-(1→6)-*O*-α-D-galactopyranosyl-(1→6)-D-glucose; |
| *O*-α-D-Glucopyranosyl-(1→4)-*O*-α-D-glucopyranosyl-(1→6)-D-glucose; |
| *O*-α-D-Glucopyranosyl-(1→6)-*O*-α-D-glucopyranosyl-(1→6)-*O*-α-D-glucopyranosyl-(1→6)-D-glucose; |
| 6-*O*-α-D-Glucopyranosyl-α-D-fructofuranose; |
| 6-*O*-α-L-Rhamnopyranosyl-D-glucose; |
| 6-*O*-α-L-Rhamnopyranosyl-D-fructose; |
oder Mischungen davon.

## Revendications

1. Utilisation d'un iso-oligosaccharide de formule (I)
R-----------------B (I)
Dans laquelle
R et B sont reliés par l'intermédiaire d'une liaison glycosidique 1→6 ;
B est un motif monosaccharide aldohexose ou cétohexose comprenant le carbone 6 portant le groupe -OH formant la liaison glycosidique entre R et B ;
R est un groupe X-A-*
dans laquelle A est un motif monosaccharide éventuellement fonctionnalisé comprenant le carbone 1 portant le groupe -OH formant la liaison glycosidique ;
dans laquelle le signe * indique le point d'attache pour le groupe R à B ;
dans laquelle X est relié à A par l'intermédiaire d'une liaison covalente et est choisi dans le groupe constitué : d'hydrogène, de monosaccharide, et d'oligosaccharides linéaires ou ramifiés, dans laquelle de tels monosaccharides ou oligosaccharides peuvent être en outre fonctionnalisés ;
ou des mélanges de ceux-ci
en guise de précurseurs d'arôme, par exemple dans des réactions de Maillard ou de caramélisation, permettant de générer au moins un odorant choisi dans le groupe constitué de :
4-hydroxy-2,5-diméthyl-3(2*H*)-furanone ;
2,3-butanedione ;
2- et 3-méthylbutanal ;
Méthional ;
Phénylacétaldéhyde ;
2-acétyl-1-pyrroline ;
et des mélanges de ceux-ci.

2. Utilisation selon la revendication 1, dans laquelle l'iso-oligosaccharide de formule (I) est un iso-oligosaccharide de formule (IB1) : 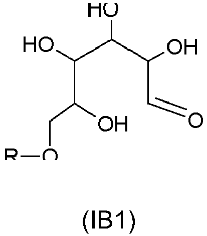 de préférence, dans laquelle l'iso-oligosaccharide de formule (IB1) est un iso-maltooligosaccharide ou des mélanges de ceux-ci.

3. Utilisation selon la revendication 1, dans laquelle l'iso-oligosaccharide de formule (I) est un iso-oligosaccharide de formule (IB2) : 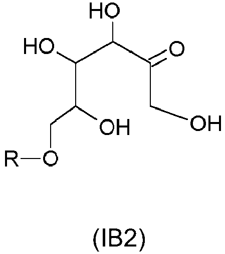 de préférence dans laquelle l'iso-oligosaccharide de formule (IB2) est le 6-*O*-α-D-glucopyranosyl-D-fructose (isomaltulose ou Palatinose^{™}).

4. Utilisation selon l'une quelconque des revendications 1 à 3, dans laquelle R, pour les iso-oligosaccharides de formule (I), n'est pas fonctionnalisé,
ou
dans laquelle R, pour les iso-oligosaccharides de formule (I), est fonctionnalisé de sorte qu'un ou plusieurs des groupes -OH dans le motif monosaccharide R sont absents (remplacés par un atome d'hydrogène) ou remplacés par un fragment choisi dans le groupe constitué de : A-O-* et A-*, dans laquelle A est tel que défini ci-dessus et l'astérisque (*) représente le point où le groupe A-O- ou A- est lié à la partie restante de composés de formule (I) par l'intermédiaire de l'atome de carbone portant initialement le groupe -OH qui est maintenant remplacé par le fragment A-* ou A-O-*.

5. Utilisation selon l'une quelconque des revendications 1 à 4, dans laquelle l'iso-oligosaccharide de formule (I) est choisi dans le groupe constitué de :
| |
|---|
| 6-*O*-β-D-glucopyranosyl-β-D-glucopyranose ; |
| 6-*O*-α-D-galactopyranosyl-α-D-glucopyranose ; |
| 6-*O*-α-D-galactopyranosyl-β-D-glucopyranose ; |
| 6-*O*-α-D-glucopyranosyl-α-D-glucopyranose ; |
| 6-*O*-β-D-galactopyranosyl-D-galactopyranose ; |
| 6-*O*-α-D-galactopyranosyl-D-galactopyranose ; |
| 6-*O*-β-D-galactopyranosyl-D-glucopyranose ; |
| 6-*O*-α-D-galactopyranosyl-D-glucopyranose ; |
| 6-*O*-β-D-glucopyranosyl-D-glucopyranose ; |
| 6-*O*-α-D-mannopyranosyl-D-glucopyranose ; |
| 6-*O*-α-D-glucopyranosyl-D-glucopyranose ; |
| 6-*O*-α-D-glucopyranosyl-D-glucose ; |
| 6-*O*-β-D-glucopyranosyl-D-glucose ; |
| 6-*O*-α-D-galactopyranosyl-D-glucose ; |
| 6-*O*-β-D-galactopyranosyl-D-galactose ; |
| 6-*O*-α-D-mannopyranosyl-D-mannose ; |
| 6-*O*-α-D-galactopyranosyl-D-galactose ; |
| 6-*O*-β-D-galactopyranosyl-D-glucose ; |
| 6-*O*-β-D-mannopyranosyl-D-mannose ; |
| 6-*O*-β-D-glucopyranosyl-D-mannose ; |
| 6-*O*-α-D-glucopyranosyl-D-fructose ; |
| 6-*O*-β-D-glucopyranosyl-D-fructose ; |
| 6-*O*-α-D-galactopyranosyl-D-fructose ; |
| *O*-α-D-glucopyranosyl-(1→6)-*O*-α-D-glucopyranosyl-(1→6)-D-glucose ; |
| *O*-α-D-galactopyranosyl-(1→6)-*O*-α-D-galactopyranosyl-(1→6)-D-glucose ; |
| *O*-α-D-glucopyranosyl-(1→4)-*O*-α-D-glucopyranosyl-(1→6)-D-glucose ; |
| *O*-α-D-glucopyranosyl-(1→6)-*O*-α-D-glucopyranosyl-(1→6)-*O*-α-D-glucopyranosyl-(1→6)-D-glucose ; |
| 6-*O*-α-D-glucopyranosyl-α-D-fructofuranose ; |
| 6-*O*-α-L-Rhamnopyranosyl-D-glucose ; |
| 6-*O*-α-L-Rhamnopyranosyl-D-fructose ; |
ou des mélanges de ceux-ci.
